# EUROPEAN PATENT APPLICATION

(11) **EP 4 791 063 A1**
(43) Date of publication of application: **12.08.2026**
(21) Application number: 24878713.7
(22) Date of filing: 02.09.2024
(51) Int. Cl.: H04W 24/02, H04W 24/10

(54) **COMMUNICATION METHOD AND APPARATUS**

(30) Priority: 19.10.2023 CN 202311364095
(71) Applicant: HUAWEI TECHNOLOGIES CO., LTD., Shenzhen, Guangdong 518129 (CN)
(72) Inventor: LU, Rui, Shenzhen, Guangdong 518129 (CN); CHEN, Jun, Shenzhen, Guangdong 518129 (CN); HU, Xingxing, Shenzhen, Guangdong 518129 (CN); YANG, Rui, Shenzhen, Guangdong 518129 (CN); WANG, Sihai, Shenzhen, Guangdong 518129 (CN)
(74) Representative: Pfenning, Meinig & Partner mbB
(86) International application number: PCT/CN2024/116316
(87) International publication number: WO 2025/082063

(57) **Abstract**

A communication method and apparatus are provided, to configure, for each terminal device, a measurement configuration parameter adapted to a status of the terminal device, thereby improving efficiency of cell measurement performed by the terminal device and reducing measurement power consumption of the terminal device. In this application, the method includes: An access network device receives assistance information from a terminal device, and, based on the assistance information, it determines measurement configuration information, which includes at least one measurement configuration parameter and an activation condition for the at least one measurement configuration parameter, and which is used by the terminal device to perform cell measurement. The access network device then sends the measurement configuration information to the terminal device, and the terminal device performs cell measurement based on the measurement configuration information.

## Description

### CROSS-REFERENCE TO RELATED APPLICATIONS

This application claims priority to Chinese Patent Application No. 202311364095.0, filed with the China National Intellectual Property Administration on October 19, 2023 and entitled "COMMUNICATION METHOD AND APPARATUS", which is incorporated herein by reference in its entirety.

### TECHNICAL FIELD

Embodiments of this application relate to the field of wireless communication, and in particular, to a communication method and apparatus.

### BACKGROUND

A terminal device may start to measure reference signals of a plurality of neighboring cells when it determines that signal quality of its serving cell falls below a measurement start threshold. Based on measurement results of the reference signals of the plurality of neighboring cells, it can select a neighboring cell whose signal quality meets a preset condition and perform cell reselection to that neighboring cell. Generally, a base station broadcasts, in a cell, measurement configuration information corresponding to the cell. Correspondingly, a terminal device in that cell may receive the measurement configuration information and perform reference signal measurement accordingly. The measurement configuration information may specify parameters such as a measurement start threshold, an identifier of a neighboring cell, and a priority of the neighboring cell.

The measurement configuration information broadcast by the base station is at a cell granularity, while a plurality of terminal devices in the cell may have different moving speeds and moving directions, or may be in different areas of the cell. The measurement configuration information cannot be adapted to a status of each terminal device.

### SUMMARY

This application provides a communication method and apparatus to configure, for each terminal device, a measurement configuration parameter adapted to a status of the terminal device, thereby improving efficiency of cell measurement performed by the terminal device and reducing measurement power consumption of the terminal device.

According to a first aspect, this application provides a communication method. The method may be performed by an access network device or a module (for example, a chip) in the access network device. For ease of description, the following uses an example in which the method is performed by the access network device for description. The access network device is, for example, a base station.

The method includes: The access network device receives assistance information from a terminal device, and the access network device determines measurement configuration information based on the assistance information, where the measurement configuration information includes at least one measurement configuration parameter and an activation condition for the at least one measurement configuration parameter, and the measurement configuration information is used by the terminal device to perform cell measurement; and the access network device sends the measurement configuration information.

In the foregoing technical solution, the access network device determines the measurement configuration information based on the assistance information, where the measurement configuration information includes a measurement configuration parameter adapted to a status of the terminal device. This helps improve efficiency of cell measurement performed by the terminal device and reduce measurement power consumption of the terminal device.

In a possible implementation, that the access network device sends the measurement configuration information may be specifically that the access network device sends the measurement configuration information to the terminal device via radio resource control (radio resource control, RRC) dedicated signaling. In a possible implementation, the access network device may further first determine a terminal device that subscribes to the measurement configuration information.

In a possible implementation, before sending the measurement configuration information to the terminal device via the RRC dedicated signaling, the access network device may further first receive a measurement configuration request from the terminal device, where the measurement configuration request includes status information of the terminal device, and the status information of the terminal device includes location information and/or mobility information of the terminal device. The access network device determines the measurement configuration information based on the status information of the terminal device, where the measurement configuration information includes the measurement configuration parameter corresponding to the status information of the terminal device.

In the foregoing technical solution, the access network device can determine, based on the status information of the terminal device, the measurement configuration parameter corresponding to the status information of the terminal device, and deliver the measurement configuration parameter corresponding to the status information of the terminal device to the terminal device, thereby reducing signaling overheads. In addition, the terminal device can directly perform cell measurement based on the measurement configuration parameter in the received measurement configuration information, thereby reducing a computation amount of the terminal device.

In a possible implementation, that the access network device sends the measurement configuration information may be specifically that the access network device sends a broadcast message, where the broadcast message includes the measurement configuration information.

In the foregoing technical solution, each terminal device in coverage of the access network device can receive the measurement configuration information, then select, based on status information of the terminal device and from the at least one measurement configuration parameter included in the measurement configuration information, a measurement configuration parameter corresponding to the status information of the terminal device, and perform cell measurement by using the selected measurement configuration parameter. This helps improve cell measurement efficiency.

In a possible implementation, the assistance information is carried in logged minimization of drive tests (logged minimization of drive tests, logged MDT). In a possible implementation, the access network device first sends first information to the terminal device, where the first information includes configuration information of the logged minimization of drive tests, and the first information indicates the terminal device to report the assistance information via the logged minimization of drive tests.

In a possible implementation, the assistance information is carried in terminal device assistance information (UE assistance information). In a possible implementation, the access network device first sends second information to the terminal device, where the second information includes configuration information of the terminal device assistance information, and the second information indicates the terminal device to report the assistance information via the terminal device assistance information.

According to a second aspect, this application provides a communication method. The method may be performed by a terminal device or a module (for example, a chip) in the terminal device. For ease of description, the following uses an example in which the method is performed by the terminal device for description.

The method includes: The terminal device sends assistance information, where the assistance information is used by an access network device to determine measurement configuration information, and the measurement configuration information includes at least one measurement configuration parameter and an activation condition for the at least one measurement configuration parameter; and the terminal device receives the measurement configuration information, and performs cell measurement based on the measurement configuration information.

In a possible implementation, that the terminal device performs cell measurement based on the measurement configuration information may be specifically that the terminal device selects, from the at least one measurement configuration parameter based on status information of the terminal device and the activation condition for the at least one measurement configuration parameter, a measurement configuration parameter adapted to the status information of the terminal device, where the status information of the terminal device includes location information and/or mobility information of the terminal device; and then the terminal device performs cell measurement based on the measurement configuration parameter adapted to the status information of the terminal device.

In a possible implementation, that the terminal device receives the measurement configuration information may be specifically that the terminal device receives the measurement configuration information from the access network device via RRC dedicated signaling. In a possible implementation, before receiving the measurement configuration information from the access network device via the RRC dedicated signaling, the terminal device may further subscribe to the measurement configuration information.

In a possible implementation, before receiving the measurement configuration information from the access network device via the RRC dedicated signaling, the terminal device may further send a measurement configuration request to the access network device, where the measurement configuration request includes the status information of the terminal device. Correspondingly, a measurement parameter included in the measurement configuration information may be the measurement configuration parameter adapted to the status information of the terminal device.

In a possible implementation, that the terminal device receives the measurement configuration information may be specifically that the terminal device receives a broadcast message from the access network device, where the broadcast message includes the measurement configuration information.

In a possible implementation, the first measurement configuration information is carried in logged minimization of drive tests. In a possible implementation, the terminal device receives first information from the access network device, where the first information includes configuration information of the logged minimization of drive tests, and the first information indicates the terminal device to report the assistance information via the logged minimization of drive tests.

In a possible implementation, the first measurement configuration information is carried in terminal device assistance information. In a possible implementation, the terminal device receives second information from the access network device, where the second information includes configuration information of the terminal device assistance information, and the second information indicates the terminal device to report the assistance information via the terminal device assistance information.

For technical effect that can be achieved in any aspect of the second aspect, refer to the descriptions of the beneficial effect in the first aspect.

According to a third aspect, this application provides a communication method. The method may be performed by an access network device or a module (for example, a chip) in the access network device. For ease of description, the following uses an example in which the method is performed by the access network device for description. The access network device is, for example, a base station.

The method includes: The access network device receives assistance information of a terminal device, and receives a measurement configuration request of the terminal device, where the measurement configuration request includes status information of the terminal device, and the status information of the terminal device includes location information and/or mobility information of the terminal device; the access network device generates measurement configuration information of the terminal device based on the assistance information of the terminal device and the status information of the terminal device, where the measurement configuration information includes a measurement configuration parameter corresponding to the status information of the terminal device; and the access network device sends the measurement configuration information.

In the foregoing technical solution, the access network device generates, based on the assistance information and the status information of the terminal device, the measurement configuration parameter corresponding to the status information of the terminal device, and sends the measurement configuration parameter corresponding to the status information of the terminal device to the terminal device. This helps improve efficiency of cell measurement performed by the terminal device and reduce measurement power consumption of the terminal device.

In a possible implementation, the access network device generates at least one measurement configuration parameter and an activation condition for the at least one measurement configuration parameter based on the assistance information of the terminal device. Then, the access network device selects, from the at least one measurement configuration parameter based on the status information of the terminal device and the activation condition for the at least one measurement configuration parameter, the measurement configuration parameter corresponding to the status information of the terminal device.

In a possible implementation, that the access network device sends the measurement configuration information may be specifically that the access network device sends the measurement configuration information to the terminal device via RRC dedicated signaling.

In a possible implementation, the assistance information is carried in logged minimization of drive tests. In a possible implementation, the access network device first sends first information to the terminal device, where the first information includes configuration information of the logged minimization of drive tests, and the first information indicates the terminal device to report the assistance information via the logged minimization of drive tests.

In a possible implementation, the assistance information is carried in terminal device assistance information. In a possible implementation, the access network device first sends second information to the terminal device, where the second information includes configuration information of the terminal device assistance information, and the second information indicates the terminal device to report the assistance information via the terminal device assistance information.

According to a fourth aspect, this application provides a communication method. The method may be performed by a terminal device or a module (for example, a chip) in the terminal device. For ease of description, the following uses an example in which the method is performed by the terminal device for description.

The method includes: The terminal device sends assistance information of the terminal device and a measurement configuration request of the terminal device, where the measurement configuration request includes status information of the terminal device, and the status information of the terminal device includes location information and/or mobility information of the terminal device; the terminal device receives measurement configuration information of the terminal device, where the measurement configuration information includes a measurement configuration parameter corresponding to the status information of the terminal device; and the terminal device performs cell measurement based on the measurement configuration parameter corresponding to the status information of the terminal device.

In a possible implementation, that the terminal device receives the measurement configuration information may be specifically that the terminal device receives the measurement configuration information from an access network device via RRC dedicated signaling. In a possible implementation, before receiving the measurement configuration information from the access network device via the RRC dedicated signaling, the terminal device may further subscribe to the measurement configuration information.

In a possible implementation, the first measurement configuration information is carried in logged minimization of drive tests. In a possible implementation, the terminal device receives first information from the access network device, where the first information includes configuration information of the logged minimization of drive tests, and the first information indicates the terminal device to report the assistance information via the logged minimization of drive tests.

In a possible implementation, the first measurement configuration information is carried in terminal device assistance information. In a possible implementation, the terminal device receives second information from the access network device, where the second information includes configuration information of the terminal device assistance information, and the second information indicates the terminal device to report the assistance information via the terminal device assistance information.

For technical effect that can be achieved in any aspect of the fourth aspect, refer to the descriptions of the beneficial effect in the third aspect.

According to a fifth aspect, this application provides a communication method. The method may be performed by a terminal device or a module (for example, a chip) in the terminal device. For ease of description, the following uses an example in which the method is performed by the terminal device for description.

The method includes: The terminal device generates assistance information, and the terminal device determines first measurement configuration information based on the assistance information, where the first measurement configuration information includes status information of the terminal device and a measurement configuration parameter corresponding to the status information of the terminal device, or the first measurement configuration information includes at least one measurement configuration parameter and an activation condition for the at least one measurement configuration parameter; and the terminal device sends the first measurement configuration information to an access network device, where the first measurement configuration information is used to assist the access network device in determining second measurement configuration information.

In the foregoing technical solution, the terminal device determines the first measurement configuration information based on the assistance information, and reports the first measurement configuration information to the access network device. The access network device can obtain the second measurement configuration information based on the first measurement configuration information. The second measurement configuration information is measurement configuration information delivered by the access network device to the terminal device, and the second measurement configuration information includes a measurement configuration parameter that matches the status information of the terminal device. This helps improve efficiency of cell measurement performed by the terminal device and reduce power consumption of the terminal device. Further, a terminal device that cannot generate first measurement configuration information based on assistance information can also receive second measurement configuration information from a base station, thereby improving cell measurement efficiency of this type of terminal device and reducing power consumption of this type of terminal device.

In a possible implementation, that the terminal device determines the first measurement configuration information based on the assistance information may be specifically that the terminal device generates, based on the assistance information and the status information of the terminal device, the measurement configuration parameter corresponding to the status information of the terminal device, where the status information of the terminal device includes location information and/or mobility information of the terminal device; and the terminal device generates the first measurement configuration information based on the status information of the terminal device and the measurement configuration parameter corresponding to the status information of the terminal device.

In the foregoing technical solution, the terminal device directly generates the measurement configuration parameter applicable to the status information of the terminal device, and then reports the measurement configuration parameter to the access network device. This helps the access network device deliver the measurement configuration parameter that matches the status information of the terminal device, thereby improving efficiency of cell measurement performed by the terminal device.

In a possible implementation, that the terminal device determines the first measurement configuration information based on the assistance information may be specifically that the terminal device generates the at least one measurement configuration parameter and the activation condition for the at least one measurement configuration parameter based on the assistance information, and generates the first measurement configuration information based on the at least one measurement configuration parameter and the activation condition for the at least one measurement configuration parameter.

In the foregoing technical solution, the terminal device generates and reports the at least one measurement configuration parameter and the activation condition for the at least one measurement configuration parameter to the access network device. In this way, the access network device can further generate the second measurement configuration information, and deliver the second measurement configuration information to the terminal device. This helps the terminal device select, from the at least one measurement configuration parameter, the measurement configuration parameter that matches the status information of the terminal device.

In a possible implementation, the first measurement configuration information is carried in logged minimization of drive tests. In a possible implementation, the terminal device receives first information from the access network device, where the first information includes configuration information of the logged minimization of drive tests, and the first information indicates the terminal device to report the first measurement configuration information via the logged minimization of drive tests.

In a possible implementation, the first measurement configuration information is carried in terminal device assistance information. In a possible implementation, the terminal device receives second information from the access network device, where the second information includes configuration information of the terminal device assistance information, and the second information indicates the terminal device to report the first measurement configuration information via the terminal device assistance information.

According to a sixth aspect, this application provides a communication method. The method may be performed by an access network device or a module (for example, a chip) in the access network device. For ease of description, the following uses an example in which the method is performed by the access network device for description.

The method includes: The access network device receives first measurement configuration information, where the first measurement configuration information includes status information of a terminal device and a measurement configuration parameter corresponding to the status information of the terminal device, or the first measurement configuration information includes at least one measurement configuration parameter and an activation condition for the at least one measurement configuration parameter, and the first measurement configuration information is generated by the terminal device based on assistance information; the access network device generates second measurement configuration information based on the first measurement configuration information; and the access network device sends the second measurement configuration information.

In a possible implementation, the first measurement configuration information is carried in logged minimization of drive tests. In a possible implementation, the access network device first sends first information to the terminal device, where the first information includes configuration information of the logged minimization of drive tests, and the first information indicates the terminal device to report the first measurement configuration information via the logged minimization of drive tests.

In a possible implementation, the first measurement configuration information is carried in terminal device assistance information. In a possible implementation, the access network device first sends second information to the terminal device, where the second information includes configuration information of the terminal device assistance information, and the second information indicates the terminal device to report the first measurement configuration information via the terminal device assistance information.

For technical effect that can be achieved in any aspect of the sixth aspect, refer to the descriptions of the beneficial effect in the fifth aspect.

In a possible implementation of any one of the first aspect to the sixth aspect, the assistance information includes one or more of the following parameters: a radio resource management (radio resource management, RRM) measurement result when the terminal device performs cell selection; an RRM measurement result when the terminal device performs cell reselection; a historical measurement configuration parameter used by the terminal device when the terminal device generates the assistance information; a number of measurements of the terminal device during a period from start of neighboring cell measurement to end of cell reselection; a cell selection result of the terminal device; a cell reselection result of the terminal device; or throughput information of the terminal device.

In the foregoing technical solution, a parameter type included in the assistance information is provided. The RRM measurement result during cell selection/reselection may be used for inference (for example, inference based on an AI model) to obtain a new measurement configuration parameter. The number of measurements of the terminal device during the period from start of neighboring cell measurement to end of cell reselection, the cell selection/reselection result of the terminal device, and the throughput information of the terminal device may be used to evaluate whether a measurement configuration parameter currently used by the terminal device is suitable, and then an evaluation result is used as a feedback result to update an inference (for example, the AI model).

In a possible implementation of any one of the first aspect to the sixth aspect, the measurement configuration parameter includes one or more of the following parameters: an identifier of a neighboring cell, a measurement frequency, a measurement start threshold, a measurement stop threshold, a measurement gap, a measurement periodicity, a measurement priority, or gain information. Alternatively, the measurement configuration information further includes gain information corresponding to at least one measurement configuration parameter, and the measurement configuration parameter includes one or more of the following parameters: the identifier of the neighboring cell, the measurement frequency, the measurement start threshold, the measurement stop threshold, the measurement gap, the measurement periodicity, and the measurement priority. The gain information includes a gain range and a probability range corresponding to the gain range.

In the foregoing technical solution, a parameter type included in the measurement configuration parameter is provided, to help the terminal device perform more efficient cell measurement.

In a possible implementation of any one of the first aspect to the sixth aspect, the activation condition includes one or more of the following parameters: area information, mobility information, or an activation period corresponding to the measurement configuration parameter. The mobility information includes a speed range and/or a moving direction.

In the foregoing technical solution, a parameter type included in the activation condition is provided. The activation condition can be used to match the status information of the terminal device, to determine the activation condition that matches the status information of the terminal device and the measurement configuration parameter corresponding to the activation condition.

According to a seventh aspect, an embodiment of this application provides a communication apparatus. The apparatus has a function of implementing the access network device according to any one of the first aspect or the possible implementations of the first aspect, or the apparatus has a function of implementing the access network device according to any one of the third aspect or the possible implementations of the third aspect, or the apparatus has a function of implementing the access network device according to any one of the sixth aspect or the possible implementations of the sixth aspect. The apparatus may be an access network device, or may be a chip included in the access network device. The apparatus has a function of implementing the terminal device according to any one of the second aspect or the possible implementations of the second aspect, or the apparatus has a function of implementing the terminal device according to any one of the fourth aspect or the possible implementations of the fourth aspect, or the apparatus has a function of implementing the terminal device according to any one of the fifth aspect or the possible implementations of the fifth aspect. The apparatus may be a terminal device, or may be a chip included in the terminal device.

The function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module. The processing module is configured to support the apparatus in performing the method according to any possible implementation of any one of the first aspect to the sixth aspect. The transceiver module is configured to support communication between the apparatus and another communication device. For example, when being a terminal device, the apparatus may send assistance information to an access network device. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform the method according to any possible implementation of any one of the first aspect to the sixth aspect. Optionally, the apparatus further includes a communication interface, and the processor is coupled to the communication interface. When the apparatus is an access network device or a terminal device, the communication interface may be a transceiver or an input/output interface. When the apparatus is a chip included in the access network device or a chip included in the terminal device, the communication interface may be an input/output interface of the chip. Optionally, the transceiver may be a transceiver circuit, and the input/output interface may be an input/output circuit.

According to an eighth aspect, an embodiment of this application provides a chip system, including a processor and a memory. The processor is coupled to the memory. The memory is configured to store a program or instructions. When the program or the instructions are executed by the processor, the chip system is enabled to implement the method according to any possible implementation of any one of the first aspect to the sixth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be respectively disposed on different chips.

According to a ninth aspect, this application provides a computer-readable storage medium. The computer-readable storage medium stores a computer program or instructions. When the computer program or the instructions are executed by a communication apparatus, the communication apparatus is enabled to perform the method according to any possible implementation of any one of the first aspect to the sixth aspect.

According to a tenth aspect, this application provides a computer program product. The computer program product includes a computer program or instructions. When the computer program or the instructions are executed by a communication apparatus, the method according to any possible implementation of any one of the first aspect to the sixth aspect is implemented.

According to an eleventh aspect, an embodiment of this application provides a communication system. The communication system includes an access network device and at least one terminal device. The access network device implements the method according to any possible implementation of the first aspect, and the terminal device implements the method according to any possible implementation of the second aspect. Alternatively, the access network device implements the method according to any possible implementation of the third aspect, and the terminal device implements the method according to any possible implementation of the fourth aspect. Alternatively, the terminal device implements the method according to any possible implementation of the fifth aspect, and the access network device implements the method according to any possible implementation of the sixth aspect.

For technical effect that can be achieved in any one of the first aspect to the eleventh aspect, refer to each other.

### BRIEF DESCRIPTION OF DRAWINGS

FIG. 1 is a diagram of an architecture of a communication system;
FIG. 2 is a diagram of deploying an AI model in a communication system;
FIG. 3 is a diagram of an application architecture of an AI model;
FIG. 4 is a schematic flowchart of a first communication method according to this application;
FIG. 5 is a schematic flowchart of a second communication method according to this application;
FIG. 6 is a schematic flowchart of a third communication method according to this application;
FIG. 7 is a diagram of a structure of a communication apparatus according to this application; and
FIG. 8 is a diagram of a structure of another communication apparatus according to this application.

### DESCRIPTION OF EMBODIMENTS

The following describes in detail embodiments of this application with reference to accompanying drawings.

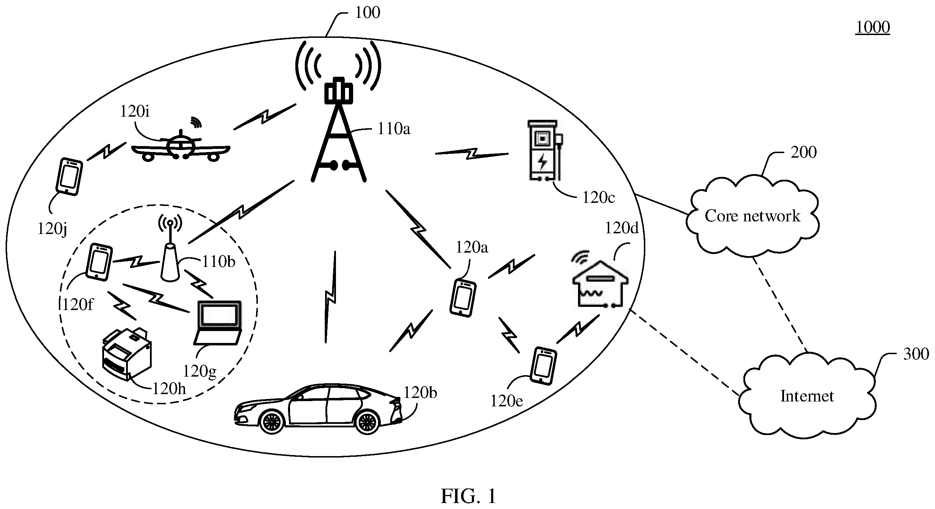

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, functions of the core network device and logical functions of the access network device may be integrated into a same physical device, or a part of the functions of the core network device and a part of the functions of the access network device may be integrated into one physical device. Terminals may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part of physical layers or all physical layers. For specific descriptions of the foregoing protocol layers, refer to related technical specifications in the 3rd generation partnership project (3rd generation partnership project, 3GPP). The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in embodiments of this application. For ease of description, the following uses an example in which the base station is used as the access network device for description.

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal are not limited in embodiments of this application. For ease of description, the following uses an example in which the UE is used as the terminal device for description.

The base station and the UE may be at fixed positions, or may be movable. The base station and the UE may be deployed on land, including an indoor or outdoor scenario, and a handheld or vehicle-mounted scenario; or may be deployed on water; or may be deployed on an airplane, a balloon, or an artificial satellite in the air. Application scenarios of the base station and the UE are not limited in embodiments of this application.

Roles of the base station and the UE may be relative. For example, a helicopter or an uncrewed aerial vehicle 120i in FIG. 1 may be configured as a mobile base station. For the UE 120j accessing the radio access network 100 via 120i, the UE 120i is a base station. However, for the base station 110a, 120i is UE, to be specific, 110a communicates with 120i according to a radio air interface protocol. Certainly, 110a may alternatively communicate with 120i according to an interface protocol between base stations. In this case, for 110a, 120i is also a base station. Therefore, the base station and the UE may be collectively referred to as communication apparatuses, 110a and 110b in FIG. 1 each may be referred to as a communication apparatus having a function of the base station, and 120a to 120j in FIG. 1 each may be referred to as a communication apparatus having a function of the UE. Communication between the base station and the UE, between base stations, or between UEs may be performed via a licensed spectrum, or may be performed via an unlicensed spectrum, or may be performed via both the licensed spectrum and the unlicensed spectrum. Communication may be performed via a spectrum below 6 gigahertz (gigahertz, GHz), or may be performed via a spectrum above 6 GHz, or may be performed via both the spectrum below 6 GHz and the spectrum above 6 GHz. A spectrum resource used for wireless communication is not limited in embodiments of this application.

In this embodiment of this application, the function of the base station may alternatively be performed by a module (for example, a chip) in the base station, or may alternatively be performed by a control subsystem including the function of the base station. The control subsystem including the function of the base station herein may be a control center in the foregoing application scenarios, such as the smart grid scenario, the industrial control scenario, the smart transportation scenario, and the smart city scenario. The function of the UE may alternatively be performed by a module (for example, a chip or a modem) in the UE, or may alternatively be performed by an apparatus including the function of the UE.

In this application, the base station sends a downlink signal or downlink information to the UE, where the downlink information is carried on a downlink channel; and the UE sends an uplink signal or uplink information to the base station, where the uplink information is carried on an uplink channel. To communicate with the base station, the UE needs to establish a wireless connection to a cell controlled by the base station. The cell that establishes the wireless connection to the UE is referred to as a serving cell of the UE. When communicating with the serving cell, the UE is further interfered with by a signal from a neighboring cell.

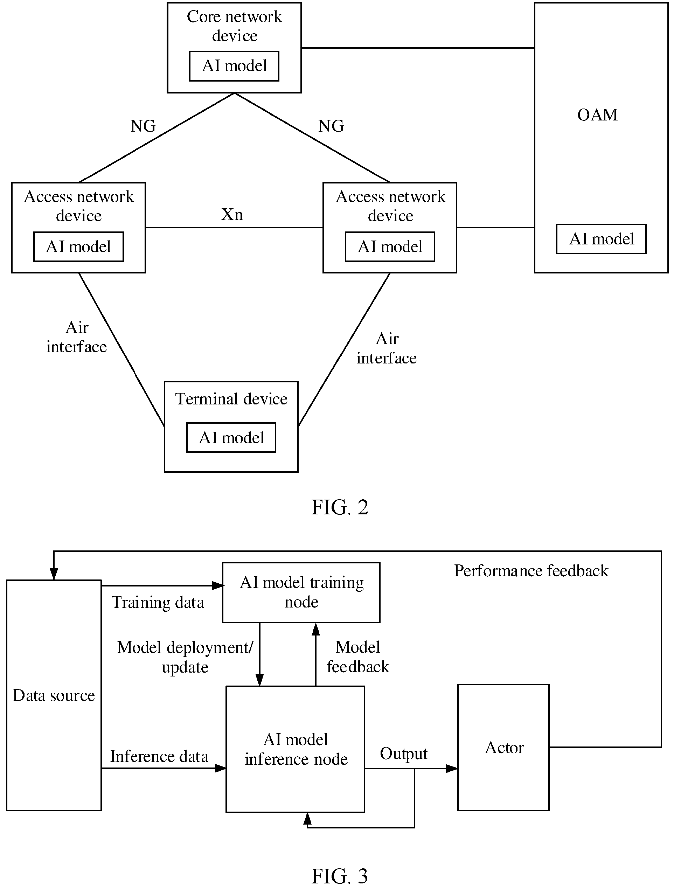

In this application, an AI model may be disposed in at least one of the core network device, the base station, the UE, operation administration and maintenance (operation administration and maintenance, OAM), or the like, and a corresponding function is implemented by using the AI model. For a deployment manner, refer to FIG. 2. The AI model represents a mapping relationship between an input and an output of the AI model. The AI model may be a neural network, a linear regression AI model, a decision tree AI model, a support vector machine (support vector machine, SVM), a Bayesian network, a Q-learning AI model, another machine learning AI model, or the like. The AI model may include an algorithm or a parameter for implementing AI. In this application, the AI model may be used for load prediction, UE trajectory prediction, channel state information prediction, optimal beam prediction, positioning prediction, measurement configuration information prediction, and the like. In addition, the AI model may further perform policy inference from perspectives such as network energy saving and mobility optimization based on a result of predicting network performance of the base station by using the trained AI model, to obtain an appropriate and efficient energy saving policy, mobility optimization policy, and the like. In this application, AI models deployed on different nodes may be the same or different. That the AI models are different includes at least one of the following differences: structural parameters of the AI models are different, for example, quantities of layers and/or weights of the AI models are different; input parameters of the AI models are different; output parameters of the AI models are different; or the like. That the input parameters of the AI models and/or the output parameters of the AI models are different may be described as that functions of the AI models are different. In addition, that the AI models are different may alternatively be distinguished by using different application scenarios of the AI models or different data sets used for training the AI models.

FIG. 3 is a diagram of an application architecture of the AI model. A data source (data source) is configured to store training data and inference data. An AI model training node (model trainning host) analyzes or trains the training data (training data) provided by the data source, to obtain the AI model, and deploys the AI model in an AI model inference node (model inference host). Optionally, the AI model training node may further update the AI model that has been deployed on the AI model inference node. The AI model inference node may further feed back related information of the deployed AI model to the AI model training node, so that the AI model training node performs optimization, update, or the like on the deployed AI model.

That the AI model training node obtains the AI model through learning is equivalent to that the AI model training node obtains, through learning based on the training data, a mapping relationship between an input and an output of the AI model. The AI model inference node uses the AI model to perform inference based on the inference data provided by the data source, to obtain an inference result. The method may alternatively be described as follows: The AI model inference node inputs the inference data to the AI model, and obtains the output by using the AI model. The output is the inference result. The inference result may indicate a configuration parameter used (executed) by an execution object, and/or an operation performed by the execution object. The inference result may be uniformly planned by an execution (actor) entity, and sent to one or more execution objects (for example, network entities) for execution. Optionally, the execution entity or the execution object may feed back a parameter or a measurement quantity collected by the execution entity or the execution object to the data source. This process may be referred to as performance feedback, and the fed-back parameter may be used as training data or inference data. Optionally, the execution entity or the execution object may further determine, based on the inference result output by the AI model inference node, feedback information related to AI model performance, and feed back the feedback information to the AI model inference node. The AI model inference node may feed back performance information and the like of the AI model to the AI model training node based on the feedback information, so that the AI model training node performs optimization, update, or the like on the deployed AI model. This process may be referred to as AI model feedback.

Cell reselection (cell reselection) is a process in which UE in a radio resource control (radio resource control, RRC) idle state monitors signal quality of a neighboring cell and a current serving cell (or referred to as a current camped cell), to select a cell with better signal quality than that of the current serving cell for camping. Further, when the signal quality and a level of the neighboring cell meet a criterion S and meet a specific reselection decision criterion, the UE camps on the neighboring cell (that is, completes a cell reselection process). After successfully camping on the cell, the UE continuously measures the cell, and determines again whether to enable a decision condition of neighboring cell measurement. The UE may further determine, based on signal quality of a neighboring cell, whether to perform cell reselection.

Generally, a base station broadcasts, in a cell, measurement configuration information corresponding to the cell. Correspondingly, UE in the cell may receive the measurement configuration information, and then measure a reference signal and determine cell reselection based on the measurement configuration information. The measurement configuration information may specify parameters such as a measurement start threshold, a measurement gap, a measurement periodicity, an identifier of a neighboring cell, a priority of the neighboring cell, and a reselection threshold.

The measurement configuration information broadcast by the base station is at a cell granularity, that is, all UEs in the cell use the same measurement configuration information to perform cell reselection. However, a plurality of UEs in the cell may be in different statuses. For example, different UEs have different moving speeds and/or moving directions, or different UEs may be in different areas of the cell. The cell-level measurement configuration information cannot be adapted to a status of each UE. For example, for UE with a high moving speed, a short measurement gap may be configured; and for UE in an area with poor signal quality, a low measurement start threshold may be configured, so that the UE can quickly reselect a cell with good signal quality. For another example, for UE with a low moving speed (or being static), a long measurement gap may be configured, to implement UE energy saving.

In view of this, this application provides a communication method, so that a base station generates measurement configuration information adapted to a status of UE. In the communication method, a step performed by the UE may be implemented by a module in the UE, and a step performed by the base station may be implemented by a module in the base station. For ease of description, the following uses an example in which the method is performed by the UE and the base station.

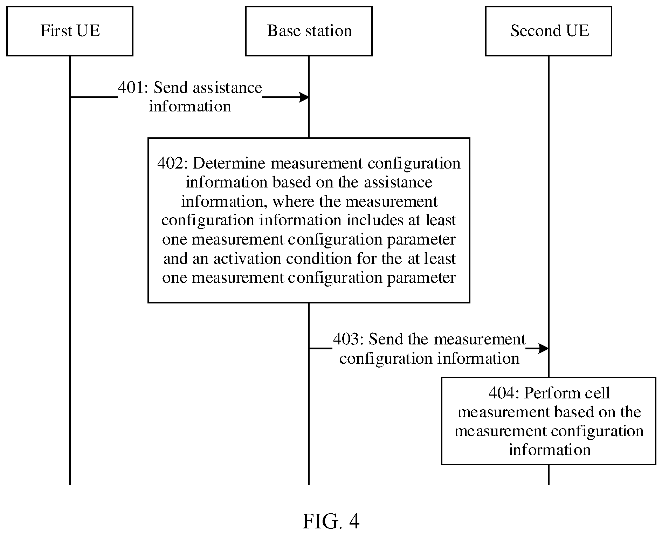

FIG. 4 is a schematic flowchart of a first communication method according to this application.

Step 401: First UE sends assistance information to the base station, and correspondingly, the base station receives the assistance information from the first UE.
1. The assistance information includes one or more of the following parameter types (1) to (7).
   (1) An RRM measurement result when UE performs cell selection
   (2) An RRM measurement result when the UE performs cell reselection

Cell selection means that a cell is selected first by the UE for camping when the UE is powered on. Cell reselection means that the UE further reselects another cell when the UE camps on a cell.

The RRM measurement result may include but is not limited to one or more of the following: a measurement quantity (or referred to as a measurement result of the measurement quantity, where a similar expression is used below) of a to-be-camped cell that the UE enters/a camped cell that the UE leaves, a type of the UE, a status of the UE corresponding to the measurement quantity, time corresponding to the measurement quantity, and a cell identifier.

Optionally, the RRM measurement result may further include one or more of the following: a measurement quantity of a neighboring cell when the UE performs cell selection or reselection, a status of the UE corresponding to the measurement quantity, time corresponding to the measurement quantity, and a cell identifier.

The status of the UE may include a position of the UE, a moving speed of the UE, and a moving direction of the UE.

The measurement quantity of the cell is, for example, one or more of reference signal received power (reference signal received power, RSRP), reference signal received quality (reference signal received quality, RSRQ), a signal to interference plus noise ratio (signal to interference and noise ratio, SINR), and a received signal strength indicator (received signal strength indication, RSSI). The cell identifier is, for example, one or more of a cell global identifier (cell global identifier, CGI) and a physical cell identifier (physical cell identifier, PCI).

(3) A historical measurement configuration parameter (which may alternatively be expressed as a current measurement configuration parameter) used by the UE when the UE generates the assistance information, where the historical measurement configuration parameter may be pre-delivered by the base station to the first UE. Optionally, the historical measurement configuration parameter may be at a cell granularity.

The historical measurement configuration parameter includes, for example, one or more of the following: a measurement frequency, an identifier of the neighboring cell, a measurement start threshold, a measurement gap, and a measurement periodicity. For example, the measurement periodicity is a periodicity in which the UE reads a synchronization signal block (synchronization signal block, SSB) of the neighboring cell.

Further, based on difference priorities of neighboring cells and whether the neighboring cells and a serving cell are intra-frequency or inter-frequency, measurement start thresholds of the neighboring cells may be different. Details may be as follows.

When a priority of the neighboring cell is higher than a priority of a current serving cell, the UE starts measurement unconditionally, that is, there is no measurement start threshold.

When the priority of the neighboring cell is the same as the priority of the current serving cell, if the neighboring cell and the serving cell are intra-frequency, and Srxlev=<SIntraSearchP and Squal=<SIntraSearchQ are fulfilled, the UE performs intra-frequency (intra-frequency) measurement. Therefore, the measurement start threshold is SIntraSearchP and SIntraSearchQ. If the neighboring cell and the serving cell are inter-frequency, and Srxlev=<SnonIntraSearchP and Squal=<SnonIntraSearchQ are fulfilled, the UE performs NR inter-frequency (NR inter-frequency) cell measurement. Therefore, the measurement start threshold is SnonIntraSearchP and SnonIntraSearchQ.

When the priority of the neighboring cell is lower than the priority of the current serving cell, if Srxlev=<SnonIntraSearchP and Squal=<SnonIntraSearchQ are fulfilled, the UE performs NR inter-frequency or inter-RAT cell measurement (inter-frequency measurement or inter-RAT measurement). Therefore, the measurement start threshold is SnonIntraSearchP and SnonIntraSearchQ.

For descriptions of the parameters, refer to the following Table 1.

**Table 1**

| Parameter name | Parameter function | System message |
|---|---|---|
| Sᵣₓₗₑᵥ | Cell selection receive (receiver, RX) level value (cell selection RX level value) | NA |
| | Represent signal quality of the current serving cell | |
| | Measured by the UE and obtained through calculation according to a calculation formula in a criterion S, not delivered by a network | |
| S_{qual} | Cell selection quality value (cell selection quality value) Represent signal quality of the current serving cell | NA |
| | Measured by the UE and obtained through calculation according to a calculation formula in the criterion S, not delivered by the network | |
| S_{intrasearchP} | Threshold for starting intra-frequency measurement, corresponding to Sᵣₓₗₑᵥ | SIB 2 |
| S_{intrasearchQ} | Threshold for starting intra-frequency measurement, corresponding to S_{qual} | SIB 2 |
| S_{nonintrasearchP} | Threshold for starting inter-frequency or inter-RAT measurement, corresponding to Sᵣₓₗₑᵥ | SIB 2 |
| S_{nonintrasearchQ} | Threshold for starting inter-frequency or inter-RAT measurement, corresponding to S_{qual} | SIB 2 |

(4) A number of measurements of the UE during a period from start of neighboring cell measurement to end of cell reselection, which may also be referred to as an average number of network search measurements of the UE, and is used to evaluate efficiency of performing cell reselection by the UE, or used to evaluate power consumption of performing cell reselection by the UE, where generally, a smaller average number of network search measurements of the UE indicates lower measurement power consumption of the UE.

(5) A cell selection result of the UE, namely whether the UE selects a suitable cell (suitable cell) after being powered on

(6) A cell reselection result of the UE, namely whether the UE reselects a suitable cell, where if the neighboring cell meets a reselection criterion, the UE camps on the suitable cell (the UE is in a camped normally state); or if the neighboring cell does not meet the reselection criterion, the UE is in an any cell selection state or a camped on any cell state.

(7) Throughput information of the UE, for example, an average throughput of the UE accessing a network, or a change of throughput of the UE accessing the network before and after cell reselection, where the throughput information of the UE is mainly used to evaluate effect of a measurement configuration parameter currently used by the UE, for example, whether throughput of the UE is improved (or link quality is improved) after the UE uses the current measurement configuration parameter.

It may be understood that the assistance information herein is specifically the assistance information of the first UE, and the UE in the foregoing parameters (1) to (7) is the first UE.

It may be further understood that a specific name of the parameter type included in the assistance information is not limited in this application. When a parameter type has a same function as a parameter type in this application, the parameter type also falls within the protection scope of this application. The descriptions are also applicable to the following embodiments.

2. The first UE may send the assistance information to the base station in the following manners.

Manner 1: The first UE reports the assistance information via logged minimization of drive tests (logged minimization of drive tests, logged MDT). In other words, the logged MDT includes the assistance information. For example, the assistance information may be carried in a logMeasReport information element.

For example, the base station sends first information to the first UE. Correspondingly, the first UE receives the first information from the base station. The first information includes configuration information of the logged MDT. Optionally, the first information may further indicate the first UE to report the assistance information via the logged MDT. The configuration information of the logged MDT in the first information implicitly indicates the first UE to report the assistance information via the logged MDT. For example, if the configuration information of the logged MDT includes a related configuration for the first UE to report the assistance information, and the configuration information of the logged MDT received by the first UE includes the related configuration for the first UE to report the assistance information, the first UE reports the assistance information via the logged MDT. Alternatively, the first information further includes first indication information, and the first indication information explicitly indicates the first UE to report the assistance information via the logged MDT. For example, the explicit indication information is a bool value, having a value of 0 or 1. When the value is 1, the first UE reports the first information. For example, the first information includes both the first indication information and the configuration information for reporting the assistance information.

For example, the configuration information of the logged MDT includes measurement duration, a measurement periodicity, and a reporting type. The measurement duration is a time range in which the first UE records measurement content. In the time range, the first UE records and reports the measurement content based on the configuration. The reporting type includes periodic reporting and event-triggered reporting. The measurement periodicity is a time interval for recording and/or reporting measurement information. Periodic reporting means that the first UE periodically reports a measurement result in a measurement time range based on a configured periodicity. For event-triggered reporting, the first UE needs to meet a trigger condition (for example, eventL1), and record and report a measurement result based on a periodicity.

Optionally, the first information may indicate only the first UE to report the assistance information via the logged MDT. The first UE reports the assistance information based on a default parameter configuration. For example, the first UE may report parameter-related information (for example, the parameter type included in the assistance information) according to a protocol specification or a pre-agreement with the base station. After receiving the first information, the first UE may learn that the first UE needs to report, via the logged MDT, the assistance information and the parameter type included in the assistance information. Optionally, the first information may indicate only the first UE to report the assistance information via the logged MDT. The first UE determines the parameter type included in the assistance information.

Optionally, the first information may alternatively include the corresponding configuration information for reporting the assistance information. For example, the first information includes at least one of the following: a generation periodicity, measurement duration (the measurement duration is a time range in which the first UE reports the assistance information, for example, when the measurement duration is set to infinity, the first UE continuously collects and reports the assistance information), and information related to a reported parameter (for example, the parameter type included in the assistance information). The first UE may generate logMeasReport based on the configuration information of the logged MDT, and then report logMeasReport to the base station.

For example, the first information may be a logged measurement configuration (logged measurement configuration) message.

Manner 2: The first UE reports the assistance information via UE assistance information (UE assistance information). In other words, the UE assistance information includes the assistance information.

For example, the base station sends second information to the first UE. Correspondingly, the first UE receives the second information from the base station. The second information includes configuration information of the UE assistance information. Optionally, the second information may further indicate the first UE to report the assistance information via the UE assistance information. For example, the configuration information of the UE assistance information in the second information implicitly indicates the first UE to report the assistance information via the UE assistance information. For example, if the configuration information of the UE assistance information includes a related configuration for the first UE to report the assistance information, and the configuration information of the UE assistance information received by the first UE includes the related configuration for the first UE to report the assistance information, the first UE reports the assistance information via the UE assistance information. Alternatively, the second information further includes second indication information, and the second indication information explicitly indicates the first UE to report the assistance information via the UE assistance information. For example, the second information includes both the first indication information and the configuration information for reporting the assistance information.

Optionally, the configuration information of the UE assistance information includes information related to a reported parameter (for example, the parameter type included in the assistance information), and the like. For the parameter type included in the assistance information, refer to the descriptions in step 401.

Optionally, the second information includes a reporting type, and the reporting type may be event-triggered reporting or periodic reporting.

Event-triggered reporting may be triggered by a change of the parameter included in the assistance information. For example, a parameter in the assistance information exceeds a threshold corresponding to the parameter, or changes of a plurality of parameters exceed thresholds corresponding to the parameters. It may be understood that different parameters correspond to different thresholds. The plurality of thresholds may be configured by the base station, for example, may be carried in the second information. Alternatively, the threshold may be a default value, and the default value is specified in a protocol. For example, if a variation of RSRP of the neighboring cell measured by the first UE relative to RSRP of the neighboring cell reported last time exceeds a threshold corresponding to the RSRP, the first UE is triggered to report the assistance information. Alternatively, it is specified that the first UE is triggered to report the assistance information only when changes of several parameters exceed thresholds corresponding to the parameters. For example, if both changes of configured RSRP and a position of the first UE exceed respective thresholds, the first UE is triggered to report the assistance information. The parameter types included in the assistance information enumerated in step 401 may be randomly combined, and combinations are not enumerated one by one in this application. Optionally, for event-triggered reporting, if the first UE obtains a parameter for the first time, reporting of the assistance information is triggered. That a parameter change is greater than a threshold further includes the following case: A new parameter is added. For example, assistance information reported last time does not include a parameter (for example, the parameter cannot be obtained, or has not been generated, or a new parameter type is added), and current assistance information obtains the parameter. In this case, it is considered that the parameter change is greater than the threshold.

For periodic reporting, the second information further carries a reporting periodicity (or referred to as a reporting time interval). The first UE periodically reports the assistance information based on the configured reporting time interval. Optionally, for periodic reporting, the first UE does not need to determine whether the assistance information changes.

Optionally, the first UE may alternatively report the assistance information through a combination of periodic reporting and event-triggered reporting. For example, the first UE periodically determines whether the assistance information changes, and if the assistance information changes, reports the assistance information, or if the assistance information does not change, does not report the assistance information.

Optionally, the second information may indicate only the first UE to report the assistance information via the UE assistance information. The first UE reports the assistance information based on a default parameter configuration. For example, the first UE may report parameter-related information (for example, the parameter type included in the assistance information) according to a protocol specification or a pre-agreement with the base station. After receiving the second information, the first UE may learn that the first UE needs to report, via the UE assistance information, the assistance information and the parameter type included in the assistance information. Optionally, the second information may indicate only the first UE to report the assistance information via the UE assistance information. The first UE determines the parameter type included in the assistance information.

For example, the second information may be an RRC configuration (RRC reconfiguration) message.

Further, when the first UE is in an RRC idle state, if the first UE determines that the assistance information needs to be reported, the first UE may first enter an RRC connected state.

Example a: Once the first UE needs to report the assistance information (for example, generate the logged MDT or the UE assistance information), the first UE initiates a random access procedure to the base station, and then enters the RRC connected state. Optionally, the first UE sends a scheduling request to the base station. The scheduling request is used to request an uplink resource from the base station. Then, the first UE reports the assistance information based on the requested uplink resource.

Example b: After generating the assistance information (for example, generating the logged MDT or the UE assistance information), the first UE does not immediately report the assistance information. Instead, when service data (for example, uplink service data or downlink service data) needs to be transmitted, the first UE initiates a random access procedure to the base station. If an uplink resource is sufficient to send the assistance information, the first UE sends the assistance information. If the uplink resource is insufficient to send the assistance information, the first UE further sends a scheduling request to the base station to request an uplink resource, and reports the assistance information based on the requested uplink resource.

Step 402: The base station determines measurement configuration information based on the assistance information.

The measurement configuration information includes at least one measurement configuration parameter and an activation condition for the at least one measurement configuration parameter.

The base station generates, based on the assistance information, N measurement configuration parameters and their respective activation conditions (for details, refer to Table 2), where N is a positive integer. For example, N is an integer greater than 1. Subsequently, the base station forms the measurement configuration information by using the N measurement configuration parameters and their respective activation conditions.

**Table 2**

| Activation condition | Measurement configuration parameter |
|---|---|
| Activation condition 1 | Measurement configuration parameter 1 |
| Activation condition 2 | Measurement configuration parameter 2 |
| ... | ... |
| Activation condition N | Measurement configuration parameter N |

The measurement configuration parameter includes but is not limited to one or more of the following parameter types: an identifier of a neighboring cell, a measurement frequency, a measurement start threshold, a measurement stop threshold, a measurement gap, a measurement periodicity, a measurement priority, or gain information.

The identifier of the neighboring cell is an identifier of a neighboring cell to be measured. Each neighboring cell may correspond to one measurement frequency. The measurement priority may specifically be a measurement priority of a neighboring cell, a measurement priority of a measurement frequency, or the like. The gain information includes one or more gain ranges and a probability range corresponding to each gain range, for example, expressed as follows: The UE has a probability of x% to obtain a gain of y%.

In a possible example, the measurement configuration parameter includes a neighboring cell list (list), which includes one or more neighboring cell identifiers, for example, a CGI or a PCI. Further, the measurement configuration parameter includes at least one of the following: a measurement frequency, a measurement start threshold, a measurement stop threshold, a measurement gap, a measurement periodicity, and a measurement priority that correspond to each neighboring cell. Alternatively, the measurement configuration parameter includes at least one of the following: a measurement start threshold, a measurement stop threshold, a measurement gap, a measurement periodicity, and a measurement priority that correspond to each measurement frequency.

Alternatively, in another possible example, a plurality of neighboring cells may correspond to a same measurement frequency, a same measurement start threshold, a same measurement stop threshold, a same measurement gap, or a same measurement priority. For example, the neighboring cell list includes cells 1 to 5. Cell 1 and cell 2 correspond to a same measurement frequency, cell 1 and cell 3 correspond to a same measurement start threshold, cell 1 and cell 4 correspond to a same measurement stop threshold, cell 1 and cell 5 correspond to a same measurement gap, and cell 2 and cell 5 correspond to a same measurement priority.

The activation condition includes but is not limited to one or more of the following parameter types: area information, mobility information, or an activation period corresponding to the measurement configuration parameter. The area information is, for example, a geographical area or a cell identifier. For example, the geographical area may be an area determined based on a reference location and a radius, or an area determined based on an area boundary, or an area determined based on a boundary line. The area information may alternatively be a cell identifier set, namely, an area represented by the cell identifier or an area represented by a mapped cell identifier (mapped cell ID), where a geographical area corresponding to the mapped cell ID is smaller than a geographical area corresponding to the cell identifier, and a mapping relationship between a mapped cell ID and a geographical area may be determined by the base station. The mobility information includes, for example, one or more of a moving speed and a moving direction. Optionally, the moving speed may be a value or a range, and the moving direction may be a value or a range. The activation period includes, for example, one or more of an expiration time, a start time, remaining validity time, and total validity duration. If the current time is in the activation period corresponding to the measurement configuration parameter, the measurement configuration parameter is activated. If the current time is outside the activation period corresponding to the measurement configuration parameter, the measurement configuration parameter is not activated (or is deactivated).

In a possible example, an AI model is deployed on the base station. The AI model is used to obtain, through inference based on the assistance information, the N measurement configuration parameters and their respective activation conditions. For example, the base station inputs the received assistance information into the AI model, to obtain the N measurement configuration parameters and their respective activation conditionsthat are output by the AI model.

In another possible example, an AI model is deployed on OAM. The AI model is used to obtain, through inference based on the assistance information, the N measurement configuration parameters and their respective activation conditions. For example, the base station sends the received assistance information to the OAM, and the OAM inputs the assistance information into the AI model, to obtain the N measurement configuration parameters and their respective activation conditions that are output by the AI model. Subsequently, the OAM sends, to the base station, the N measurement configuration parameters and their respective activation conditions. In addition, the AI model may alternatively be deployed on a core network device. For this implementation, refer to the implementation in which the AI model is deployed on the OAM.

Further, the base station may further obtain status information of second UE, determine, based on the status information of the second UE, the N measurement configuration parameters, and their respective activation conditions, a measurement configuration parameter corresponding to the status information of the second UE, and use the determined measurement configuration parameter and an activation condition for the measurement configuration parameter as the measurement configuration information.

The first UE is UE that reports the assistance information, and the second UE is UE that receives the measurement configuration information. There is one or more first UEs, and there may also be one or more second UEs. It should be noted that, for a UE, the UE may report assistance information to the base station based on a historical measurement configuration parameter, and may also receive new measurement configuration information from the base station; or the UE is configured only to report the assistance information to the base station based on the historical measurement configuration parameter, or the UE is configured only to receive the new measurement configuration information from the base station.

The status information of the second UE includes one or more of the following: mobility information of the second UE (for example, a moving speed of the second UE and a moving direction of the second UE), and location information of the second UE (for example, a geographical position and an identifier of a cell in which the second UE is).

That the base station determines the measurement configuration parameter corresponding to the status information of the second UE may be specifically that the base station selects, from the N measurement configuration parameters based on activation periods respectively corresponding to the N measurement configuration parameters, n measurement configuration parameters that are being activated, where n is an integer less than or equal to N; and subsequently, the base station selects, from the n measurement configuration parameters based on location information, speed ranges, and moving directions that respectively correspond to the n measurement configuration parameters, a measurement configuration parameter whose area information includes the location information of the second UE, whose speed range includes the moving speed of the second UE, and whose moving direction is the same as the moving direction of the second UE, and then uses the selected measurement configuration parameter as the measurement configuration parameter corresponding to the status information of the second UE. With reference to the example in Table 2, the activation condition 1 includes a real geographical area 1, a speed range 1, a moving direction 1, and an activation period 1, the activation condition 2 includes a real geographical area 1, a speed range 2, a moving direction 2, and an activation period 2, and the activation condition 3 includes a real geographical area 3, a speed range 3, a moving direction 3, and the like. If the geographical position in the status information of the second UE is in the real geographical area 1, the moving direction in the status information of the second UE matches the moving direction 1, the moving speed in the status information of the second UE is in the moving range 1, and the current moment is in the activation period 1, the base station may determine that the measurement configuration parameter 1 corresponding to the activation condition 1 is the measurement configuration parameter corresponding to the status information of the second UE, and therefore use the measurement configuration parameter 1 as the measurement configuration information.

The base station may alternatively directly generate the measurement configuration parameter that matches the status information of the second UE, without selecting one of the N measurement configuration parameters based on the status information of the second UE. Specifically, the base station generates, based on the assistance information and the status information of the second UE, the measurement configuration parameter corresponding to the status information of the second UE and the activation condition corresponding to the measurement configuration parameter. It may be understood that, if the second UE determines, based on current status information of the second UE and the activation condition corresponding to the measurement configuration parameter, that the activation condition is not met, the measurement configuration parameter is not activated.

That the base station obtains the status information of the second UE may be specifically that the second UE sends a measurement configuration request to the base station, and correspondingly, the base station receives the measurement configuration request from the second UE, where the measurement configuration request includes the status information of the second UE.

Step 403: The base station sends the measurement configuration information. Correspondingly, the second UE receives the measurement configuration information from the base station.

Manner 1: The base station sends a broadcast message, where the broadcast message includes the measurement configuration information, and the measurement configuration information includes the N measurement configuration parameters and their respective activation conditions. Correspondingly, the second UE receives the broadcast message.

Optionally, the second UE may further send first request information to the base station, where the first request information is used to request system information, for example, used to request a system information block (system information block, SIB) that carries the measurement configuration information. For example, the first request information may be carried in MSG1 or MSG3. In response to the first request information, the base station sends the broadcast message, where the broadcast message carries the measurement configuration information.

Example 1: The measurement configuration information may be carried in an existing SIB, for example, a SIB 2, a SIB 3, or a SIB 4. For example, the base station broadcasts the SIB 2, where the SIB 2 carries the measurement configuration information. Correspondingly, the second UE receives the SIB 2, and obtains the measurement configuration information from the SIB 2.

Example 2: A new SIB (for example, a SIB x) is defined, and the SIB x carries the measurement configuration information. For example, the base station broadcasts the SIB x. Correspondingly, the second UE receives the SIB x, and obtains the measurement configuration information from the SIB x. In Example 2, only UE that supports the feature can read the SIB x. Specifically, the UE reads scheduling information of the SIB x from a SIB 1, and if a UE capability supports the feature, the UE further reads the SIB x. For example, the UE capability is a capability of whether the UE supports measurement configuration enhancement. The capability may be reported by the UE to the base station, or may be obtained by the base station from a core network. If the UE does not support the feature or the UE does not have the capability, the UE does not read the SIB x.

In addition, to further reduce power consumption of reading the SIB x by the second UE, the second UE may read the SIB x when current measurement configuration information (for example, legacy (legacy) measurement configuration information or previous enhanced measurement configuration information) is invalid or when the current measurement configuration information is unavailable.

It may be understood that the measurement configuration information herein is measurement configuration information enhanced by the base station.

For ease of description, unless otherwise specified, "measurement configuration information" in the following descriptions is all "enhanced measurement configuration information".

In a possible manner 2, the base station delivers the measurement configuration information to the second UE via RRC dedicated signaling. Correspondingly, the second UE receives the measurement configuration information from the base station via the RRC dedicated signaling. The RRC dedicated signaling is, for example, an RRC reconfiguration message.

In an example, the base station delivers the measurement configuration information to the second UE via the RRC dedicated signaling, where the measurement configuration information includes the N measurement configuration parameters and their respective activation conditions. Optionally, before delivering the measurement configuration information to the second UE via the RRC dedicated signaling, the base station may first obtain, from the core network device (for example, unified data management (unified data management, UDM)), an identifier of one or more UEs that subscribe to the measurement configuration information, where the one or more UEs include the second UE.

Optionally, if the second UE sends the measurement configuration request to the base station, the base station delivers the measurement configuration information to the second UE via the RRC dedicated signaling. The measurement configuration information includes the N measurement configuration parameters and their respective activation conditions.

Optionally, before delivering the measurement configuration information to the second UE via the RRC dedicated signaling, the base station may first obtain, from the core network device, information that the second UE subscribes to the enhanced feature. If the base station determines that the second UE subscribes to the enhanced feature, the base station delivers the measurement configuration information to the second UE.

Optionally, before delivering the measurement configuration information to the second UE via the RRC dedicated signaling, the base station may first obtain a capability indication indicating whether the second UE supports the feature. The base station may obtain, from the core network device (for example, an access and mobility management function (access and mobility management function, AMF)), the capability indication indicating whether the second UE supports the feature, or the base station may obtain, from a UE radio capability (UE radio capability) reported by the second UE, the capability indication indicating whether the second UE supports the feature.

In another example, the base station delivers the measurement configuration information to the second UE via the RRC dedicated signaling, where the measurement configuration information includes the measurement configuration parameter corresponding to the status information of the second UE and the activation condition for the measurement configuration parameter. Optionally, before delivering the measurement configuration information to the second UE via the RRC dedicated signaling, the base station may first receive the measurement configuration request from the second UE, where the measurement configuration request includes the status information of the second UE. For details, refer to the descriptions in step 402.

Optionally, when determining that the current measurement configuration information (for example, the legacy measurement configuration information or the previous enhanced measurement configuration information) is invalid or the current measurement configuration information is unavailable, the second UE deletes the invalid or unusable measurement configuration information. Further, the second UE sends the measurement configuration request to the base station.

It should be noted that, if the second UE receives both the legacy measurement configuration information and the enhanced measurement configuration information, the second UE preferably uses the enhanced configuration information. Specifically, the second UE may use all enhanced configuration information, or use a part of the enhanced configuration information and use the legacy measurement configuration information for a remaining part. If the second UE determines that the currently used enhanced measurement configuration information expires or is unusable (for example, an activation condition cannot match, for example, a UE position does not match, a UE speed does not match, or an activation period does not match), the second UE uses the legacy measurement configuration information.

Step 404: The second UE performs cell measurement based on the measurement configuration information.

Manner a: When the measurement configuration information includes the N measurement configuration parameters and their respective activation conditions, the second UE determines the status information of the second UE, and then determines, based on the status information of the second UE, the N measurement configuration parameters, and their respective activation conditions, the measurement configuration parameter corresponding to the status information of the second UE. For a specific implementation, refer to the descriptions of determining, by the base station, the measurement configuration parameter corresponding to the status information of the second UE in step 402. Further, the second UE performs cell measurement based on the selected measurement configuration parameter corresponding to the status information of the second UE.

Manner b: When the measurement configuration information includes the measurement configuration parameter corresponding to the status information of the second UE, the second UE may directly perform measurement based on the measurement configuration parameter in the measurement configuration information. For example, the measurement configuration information includes one measurement configuration parameter. Alternatively, the measurement configuration information includes one measurement configuration parameter and a corresponding activation condition. After determining that the current status information of the second UE matches the activation condition for the measurement configuration parameter, the second UE performs measurement based on the measurement configuration parameter.

Optionally, the second UE may obtain an RRM measurement result after performing cell measurement based on the measurement configuration information. The second UE performs cell reselection based on the RRM measurement result.

Optionally, the second UE further generates new assistance information based on the RRM measurement result or a cell reselection result, and sends the new assistance information to the base station. A parameter type included in the new assistance information may be the same as the parameter type included in the assistance information in step 401, or the parameter type included in the new assistance information is a part of the parameter types included in the assistance information in step 401, for example, includes the cell reselection result of the UE, the number of measurements of the UE during the period from start of neighboring cell measurement to end of cell reselection, and the throughput information of the UE, or includes an indication indicating whether the UE uses an enhanced measurement configuration parameter configured by the base station, where the indication may be a bool (bool) value, having a value of 0 or 1. It may be understood that the assistance information herein is specifically assistance information of the second UE, and the UE in the foregoing parameters (1) to (7) is the second UE.

Optionally, in a scenario in which the base station includes the AI model, after receiving the new assistance information from the second UE, the base station may further optimize the AI model based on the new assistance information. In a scenario in which the OAM includes the AI model, after receiving the new assistance information from the second UE, the base station may further send the new assistance information to the OAM, and the OAM optimizes the AI model based on the new assistance information. A scenario in which the core network device includes the AI model is similar to the scenario in which the OAM includes the AI model. Optimizing the AI model is, for example, updating a model parameter or a model structure in the AI model.

In a possible manner, the second UE performs measurement based on the measurement configuration parameter corresponding to the status information of the second UE. Details are as follows.

The second UE needs to consider two parameters when starting neighboring cell measurement: a cell priority and signal quality of a serving cell.

Specifically, when a priority of a neighboring cell is higher than a priority of a current serving cell, the second UE starts measurement unconditionally. When the priority of the neighboring cell is the same as the priority of the current serving cell, or when the priority of the neighboring cell is lower than the priority of the current serving cell, the second UE compares signal quality of the currently camped serving cell obtained through measurement with a measurement start threshold delivered by the base station. If the second UE determines that the signal quality of the currently camped serving cell is higher than the measurement start threshold, the second UE does not start neighboring cell measurement. If the second UE determines that the signal quality of the currently camped serving cell is lower than or equal to the measurement start threshold, the second UE starts neighboring cell measurement.

Further, the second UE may determine, based on signal quality of the neighboring cell, whether to perform cell reselection. The following descriptions are provided still based on priorities of the serving cell and the neighboring cell.
(1) When the priority of the neighboring cell is higher than the priority of the current serving cell:
   If threshServingLowQ is broadcast in the SIB 2 and more than 1 second has elapsed since the second UE camps on the current serving cell, cell reselection to a cell on a higher priority NR frequency or inter-RAT frequency than a serving frequency needs to be performed in the following case:
      a cell of a higher priority NR or E-UTRAN RAT/frequency fulfills Signal quality Squal of the current serving cell>High priority cell reselection threshold Thresh_{X,HighQ} during a time interval Treselection_{RAT}.
   Otherwise, cell reselection to a cell on a higher priority NR frequency or inter-RAT frequency than the serving frequency needs to be performed in the following case:
      a cell of a higher priority RAT/frequency fulfills Signal quality Srxlev of the current serving cell>Thresh_{X,HighP} during the time interval Treselection_{RAT}; and more than 1 second has elapsed since the second UE camps on the current serving cell.
(2) When the priority of the neighboring cell is the same as the priority of the current serving cell:
   Cell reselection to a cell on an equal priority is performed according to a criterion R. According to the R criterion, R values of each neighboring cell and the current serving cell are calculated based on cell signal quality. A calculation method is as follows: $Rs = Qmeas , s + Qhyst - Qoffsettemp$ $Rn = Qmeas , n - Qoffset - Qoffsettemp$

Then, the cells are ranked based on the R values, that is, a best cell is selected based on the R values. Details are as follows.
a. A cell needs to meet the criterion S, where the criterion S is Srxlev>0 AND Squal>0. $Srxlev = Qrxlevmeas - \left(Qrxlevmin+Qrxlevminoffset\right) - Pcompensation - Qoffsettemp$ $Squal = Qqualmeas - \left(Qqualmin+Qqualminoffset\right) - Qoffsettemp$

If rangeToBestCell is not configured, the second UE selects a cell with a highest R value as a target cell.

If rangeToBestCell is configured, a largest R value and all cells whose R values are in rangeToBestCell of the largest R value are found, and a cell with a highest number of beams above a threshold (i.e. absThreshSS-BlocksConsolidation) is selected as the target cell. If there are a plurality of cells with numbers of beams above the threshold, a cell with a largest R value is selected as the target cell.

If the target cell selected in the foregoing steps is not the current serving cell, it is determined whether the target cell meets the following conditions:
If the target cell is not the current serving cell and meets the following conditions, the second UE performs cell reselection to the cell. Otherwise, the second UE continues to camp on the original serving cell:
the target cell fulfills the cell reselection criterion in the foregoing steps throughout TreselectionNR; and
more than 1s has elapsed since the second UE camps on the current serving cell.

(3) When the priority of the neighboring cell is lower than the priority of the current serving cell:
If threshServingLowQ is broadcast in the SIB 2 and more than 1 second has elapsed since the second UE camps on the current serving cell, cell reselection to a cell on a lower priority NR frequency or inter-RAT frequency than a serving frequency needs to be performed in the following case: $the serving cell fulfills Squal < {Thresh}_{Serving , LowQ ;}$ and
a cell of a lower priority NR or E-UTRAN RAT/frequency fulfills Squal>Thresh_{X,LowQ} during a time interval Treselection_{RAT}.

Otherwise, cell reselection to a cell on a lower priority NR frequency or inter-RAT frequency than the serving frequency needs to be performed in the following cases: The serving cell fulfills Srxlev<Thresh_{Serving,LowP}; a cell of a lower priority RAT/frequency fulfills Srxlev>Thresh_{X,LowP} during the time interval Treselection_{RAT}; and more than 1 second has elapsed since the second UE camps on the current serving cell.

For descriptions of the parameters, refer to the following Table 3.

**Table 3**

| Parameter name | Parameter function | System message | Field |
|---|---|---|---|
| Q_{meas,s} | Calculation parameter in the criterion R Signal quality of the current serving cell, obtained by the UE through measurement, not delivered by the network; RSRP value of the serving cell | NA | NA |
| Q_{meas,n} | Calculation parameter in the criterion R Signal quality of the neighboring cell, obtained by the UE through measurement, not delivered by the network; RSRP value of the neighboring cell | NA | NA |
| Q_{Hyst} | Calculation parameter in the criterion R Reselection hysteresis value of the current serving cell, where a larger value indicates a larger boundary of the serving cell and a lower probability of reselection to the neighboring cell. | SIB 2 | cellreselectionInfoCommon |
| Qoffset | Calculation parameter in the criterion R In an intra-frequency reselection scenario, the value is Qoffsetcell, and is obtained from the SIB 3. In an inter-frequency reselection case, the value is equal to QoffsetCell+QoffsetFreq, and the two values are obtained from the SIB 4. | SIB 3/ SIB 4 | IntraFreqNeighCellInfo/ InterFreqCarrierFreqInfo |
| Qoffsettemp | Calculation parameter in the criterion R | SIB 1 | ConnectionEstFailureControl-> connEstFailOffset |
| Thresh_{x,highP} | High priority cell | SIB 4/ | InterFreqCarrierFreqInfo/ |
| Thresh_{x,highQ} | reselection threshold, where a high priority cell may be reselected when quality of the high priority cell is greater than the value. X indicates a frequency. Each high priority frequency has a corresponding threshold. | SIB 5 | CarrierFreqEUTRA |
| | For an inter-frequency high priority cell, this parameter is in the SIB 4. For an inter-RAT high priority cell, this parameter is in a SIB 5. | | |
| threshServingLowQ | Low priority reselection, where quality of the current serving cell is less than the value. | SIB 2 | cellReselectionServingFreqInfo |
| Thresh_{x,lowP} Thresh_{x,lowQ} | Low priority cell reselection threshold, where a low priority cell may be reselected when quality of the low priority cell is greater than the value. | SIB 4/ SIB 5 | InterFreqCarrierFreqInfo/ CarrierFreqEUTRA |
| | For an inter-frequency low priority cell, this parameter is in the SIB 4. For an inter-RAT low priority cell, this parameter is in the SIB 5. | | |
| | X indicates a frequency, and this parameter is related to the frequency. The value may vary with different frequencies. | | |
| T_{reselectionRAT} | This parameter may vary with different standards, and is separately tReselectionNR and t-ReselectionEUTRA on an NR network and an LTE network. | SIB 2/ SIB 4/ SIB 5 | IntraFreqCellReselectionInfo/ InterFreqCarrierFreqInfo/ t-ReselectionEUTRA |

In the foregoing technical solution, the first UE generates the assistance information based on the historical measurement configuration parameter, and reports the assistance information to the base station. Correspondingly, the base station (or the OAM) can generate the measurement configuration information based on the assistance information. The measurement configuration information includes at least one measurement configuration parameter and an activation condition for the at least one measurement configuration parameter. The measurement configuration information includes the measurement configuration parameter whose activation condition is adapted to the status information of the second UE. When the second UE performs cell measurement by using the measurement configuration parameter whose activation condition is adapted to the status information of the second UE, cell measurement efficiency is improved, and measurement power consumption of the second UE is reduced.

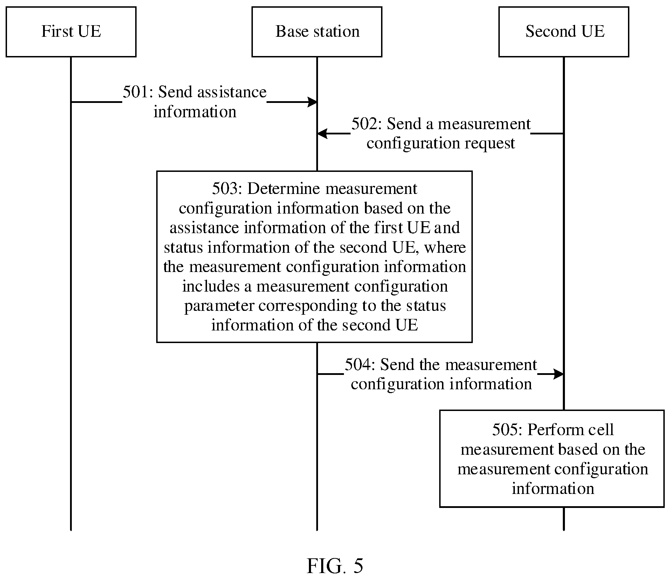

FIG. 5 is a schematic flowchart of a second communication method according to this application.

Step 501: First UE sends assistance information of the first UE to the base station, and correspondingly, the base station receives the assistance information from the first UE.

For descriptions of the assistance information, refer to the descriptions in step 401.

Step 502: Second UE sends a measurement configuration request to the base station, where the measurement configuration request includes status information of the second UE.

The first UE is UE that reports the assistance information, and the second UE is UE that receives measurement configuration information. There is one or more first UEs, and there may also be one or more second UEs. For details, refer to the descriptions in step 402.

For details about the status information of the second UE, refer to the descriptions in step 402.

Step 503: The base station determines the measurement configuration information based on the assistance information of the first UE and the status information of the second UE, where the measurement configuration information includes a measurement configuration parameter corresponding to the status information of the second UE.

In a possible manner, the base station determines, based on the assistance information of the first UE, N measurement configuration parameters and their respective activation conditions. For a specific implementation, refer to the descriptions in step 402. Further, the base station then determines, based on the status information of the second UE, the N measurement configuration parameters, and their respective activation conditions, the measurement configuration parameter corresponding to the status information of the second UE, and uses the measurement configuration parameter corresponding to the status information of the second UE as the measurement configuration information. For a specific implementation in which the base station determines the measurement configuration parameter corresponding to the status information of the second UE, refer to the descriptions in step 402.

In another possible manner, the base station generates, based on the assistance information and the status information of the second UE, the measurement configuration parameter corresponding to the status information of the second UE, and uses the measurement configuration parameter corresponding to the status information of the second UE as the measurement configuration information. For descriptions of the status information of the second UE and the measurement configuration parameter, refer to the descriptions in step 402.

In a possible example, an AI model is deployed on the base station, and the AI model is used to obtain, through inference based on the assistance information and the status information of the second UE, the measurement configuration parameter corresponding to the status information of the second UE. For example, the base station inputs the received assistance information and status information of the second UE into the AI model, to obtain the measurement configuration parameter that corresponds to the status information of the second UE and that is output by the AI model.

In another possible example, an AI model is deployed on OAM, and the AI model is used to obtain, through inference based on the assistance information and the status information of the second UE, the measurement configuration parameter corresponding to the status information of the second UE. For example, the base station sends the assistance information and the status information of the second UE to the OAM, and the OAM inputs the assistance information and the status information of the second UE into the AI model, to obtain the measurement configuration parameter that corresponds to the status information of the second UE and that is output by the AI model. Subsequently, the OAM sends the measurement configuration parameter corresponding to the status information of the second UE to the base station. In addition, the AI model may alternatively be deployed on a core network device. For this implementation, refer to the implementation in which the AI model is deployed on the OAM.

Step 504: The base station sends the measurement configuration information to the second UE, and correspondingly, the second UE receives the measurement configuration information from the base station.

In an example, the base station delivers the measurement configuration information to the second UE via RRC dedicated signaling, where the measurement configuration information includes the measurement configuration parameter corresponding to the status information of the second UE. The second UE subscribes to the measurement configuration information.

Step 505: The second UE performs cell measurement based on the measurement configuration information.

Optionally, the second UE may obtain an RRM measurement result after performing cell measurement based on the measurement configuration parameter in the measurement configuration information. The second UE performs cell reselection based on the RRM measurement result. Optionally, the second UE further generates new assistance information based on the RRM measurement result, and sends the new assistance information to the base station. Optionally, a network side (the base station, the OAM, or the core network device) may further optimize the AI model based on the new assistance information from the second UE. For details, refer to the descriptions in step 404.

For a specific implementation in which the second UE performs cell measurement (starts neighboring cell measurement, performs cell reselection, or the like) based on the measurement configuration information, refer to the descriptions in step 404.

In the foregoing technical solution, the first UE generates the assistance information of the first UE based on a historical measurement configuration parameter, and reports the assistance information of the first UE to the base station. When needing to obtain the measurement configuration parameter corresponding to the status information of the second UE, the second UE can send the measurement configuration request to the base station, where the measurement configuration request includes the measurement configuration parameter corresponding to the status information of the second UE. Subsequently, the base station can generate, based on the assistance information of the first UE and the status information of the second UE, the measurement configuration parameter corresponding to the status information of the second UE, and deliver the measurement configuration parameter corresponding to the status information of the second UE to the second UE as the measurement configuration information. The second UE performs cell measurement based on the measurement configuration parameter corresponding to the status information of the second UE. This helps improve efficiency of cell measurement performed by the second UE and reduce power consumption of the second UE.

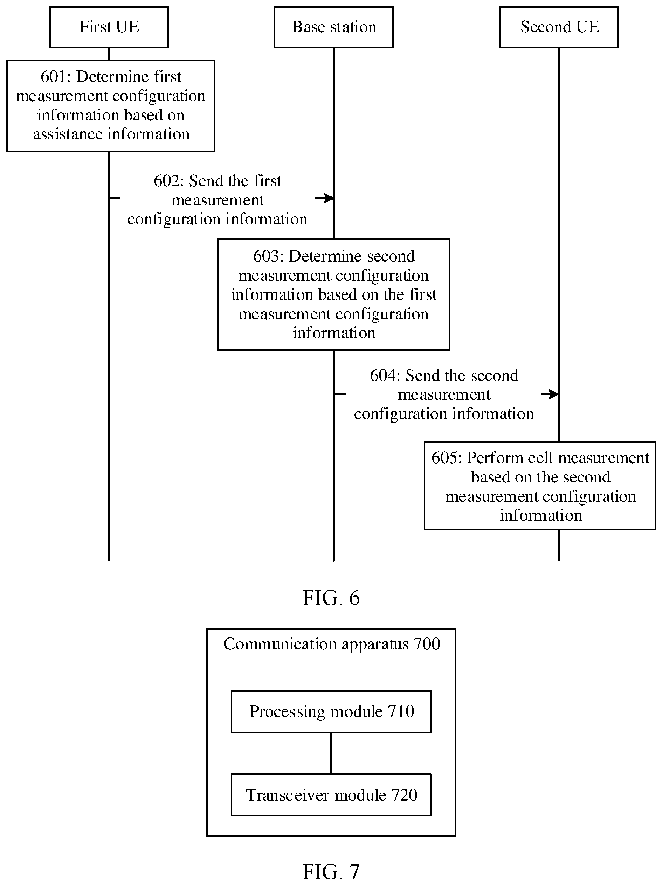

FIG. 6 is a schematic flowchart of a third communication method according to this application.

Step 601: First UE determines first measurement configuration information based on assistance information.

In a specific implementation, the first UE generates the assistance information based on a historical measurement configuration parameter. Then, the first UE determines the first measurement configuration information based on the assistance information.

The historical measurement configuration parameter includes one or more of the following: a measurement frequency, an identifier of a neighboring cell, a measurement start threshold, a measurement gap, a measurement periodicity, or the like. For details, refer to the descriptions in step 401.

The assistance information includes one or more of the following parameter types (1) to (7): (1) an RRM measurement result when UE performs cell selection; (2) an RRM measurement result when the UE performs cell reselection; (3) a historical measurement configuration parameter used by the UE when the UE generates assistance information; (4) a number of measurements of the UE during a period from start of neighboring cell measurement to end of cell reselection; (5) a cell selection result of the UE; (6) a cell reselection result of the UE; and (7) throughput information of the UE. For specific descriptions of the parameter types (1) to (7), refer to the descriptions in step 401.

The first measurement configuration information includes status information of the first UE and a measurement configuration parameter corresponding to the status information of the first UE, or the first measurement configuration information includes at least one measurement configuration parameter and an activation condition for the at least one measurement configuration parameter.

The status information of the first UE includes one or more of the following: mobility information of the first UE and location information of the first UE. For details, refer to the descriptions in step 402. The measurement configuration parameter includes at least one of the following: a measurement frequency, a measurement start threshold, a measurement stop threshold, a measurement gap, a measurement periodicity, and a measurement priority that correspond to each neighboring cell. For details, refer to the descriptions in step 402. The activation condition includes at least one of the following: area information, mobility information, or an activation period corresponding to the measurement configuration parameter. For details, refer to the descriptions in step 402.

Manner (1): The first UE generates, based on the assistance information, N measurement configuration parameters and their respective activation conditions respectively, where N is a positive integer. For example, N is an integer greater than 1. The first UE forms the first measurement configuration information by using the N measurement configuration parameters and their respective activation conditions.

In a possible example, an AI model is deployed on the first UE. The AI model is used to obtain, through inference based on the assistance information, the N measurement configuration parameters and their respective activation conditions. For example, the first UE inputs the assistance information into the AI model, to obtain the N measurement configuration parameters and their respective activation conditions that are output by the AI model.

Further, the first UE may further determine, based on the status information and the assistance information of the first UE, the measurement configuration parameter corresponding to the status information of the first UE. In a specific implementation, the first UE may further obtain the status information of the first UE, and determine, based on the status information of the first UE, the N measurement configuration parameters, and their respective activation conditions, the measurement configuration parameter corresponding to the status information of the first UE. Subsequently, the first UE performs cell measurement based on the measurement configuration parameter corresponding to the status information of the first UE.

Manner (2): The first UE generates, based on the assistance information and the status information of the first UE, the measurement configuration parameter corresponding to the status information of the first UE, and uses the measurement configuration parameter corresponding to the status information of the first UE as the first measurement configuration information. Herein, the first measurement configuration information may be considered as a measurement configuration parameter recommended by the first UE. Optionally, the first measurement configuration information further includes the status information of the first UE, and the status information of the first UE includes at least one of the following: a position of the UE, a moving speed of the UE, and a moving direction of the UE. Further, the first UE further performs cell measurement based on the first measurement configuration information.

Optionally, in Manner (1) and Manner (2), the first measurement configuration information generated by the first UE may further include a network search result, and a parameter type included in the network search result may be a part or all of the parameter types included in the assistance information.

For example, the network search result includes at least one of the following parameter types: a configuration parameter currently used by the UE (namely, the historical measurement configuration parameter), the RRM measurement result when the UE performs cell reselection, an average number of network search measurements of the UE, the cell reselection result of the UE, and the throughput information of the UE. For specific descriptions, refer to the descriptions of the parameter types included in the assistance information in step 401.

Optionally, the network search result further includes third indication information, and the third indication information indicates whether the configuration parameter currently used by the UE is suitable. The third indication information may be of a bool type, having a value of 1 or 0. When the value of the third indication information is 1, it indicates that the configuration parameter currently used by the UE is appropriate, and the base station does not need to adjust the measurement configuration parameter. When the value of the third indication information is 0, it indicates that the configuration parameter currently used by the UE is inappropriate, and the base station needs to adjust the measurement configuration parameter. Optionally, the third indication information may include a plurality of indications, and the plurality of indications may respectively indicate whether values of corresponding parameter types are appropriately configured. For example, different indications are defined in the third indication information, and may respectively indicate whether values of parameters such as the measurement start threshold and the measurement gap are appropriately configured.

In a possible example, an AI model is deployed on the first UE, and the AI model is used to obtain, through inference based on the assistance information and the status information of the UE, the measurement configuration parameter corresponding to the status information of the UE. For example, the first UE inputs the assistance information and the status information of the first UE into the AI model, to obtain the measurement configuration parameter that corresponds to the status information of the first UE and that is output by the AI model, and uses the measurement configuration parameter corresponding to the status information of the first UE as the first measurement configuration information.

Step 602: The first UE sends the first measurement configuration information to the base station.

The first UE may send the first measurement configuration information to the base station in the following manners.

Manner (1): The first UE reports the first measurement configuration information via logged MDT. In other words, the logged MDT includes the first measurement configuration information. For example, the first measurement configuration information may be carried in a logMeasReport information element.

For example, the base station sends first information to the first UE, where the first information includes configuration information of the logged MDT. The first information may indicate the first UE to report the first measurement configuration information via the logged MDT. Optionally, the configuration information of the logged MDT in the first information implicitly indicates the first UE to report the first measurement configuration information via the logged MDT. Alternatively, the first information further includes first indication information, and the first indication information explicitly indicates the first UE to report the first measurement configuration information via the logged MDT.

For example, the configuration information of the logged MDT includes but is not limited to a generation interval of measurement configuration information and a reporting type. The generation interval of the measurement configuration information indicates a time interval at which the first UE generates the measurement configuration information. It may be considered that the first UE periodically generates the measurement configuration information. The reporting type includes periodic reporting and event-triggered reporting.

Optionally, the first information may indicate only the first UE to report the first measurement configuration information via the logged MDT. The first UE reports the first measurement configuration information based on a default parameter configuration. For example, the first UE may report parameter-related information according to a protocol specification or a pre-agreement with the base station. After receiving the first information, the first UE may learn that the first UE needs to report, via the logged MDT, the first measurement configuration information and the parameter type included in the first measurement configuration information. Optionally, the first information may alternatively include corresponding configuration information for reporting the first measurement configuration information. For example, the first information includes information related to a reported parameter. The information related to the reported parameter includes content of the reported parameter. For details, refer to the descriptions of the parameter types included in the first measurement configuration information in step 601. The first UE may generate logMeasReport based on the configuration information of the logged MDT, and then report logMeasReport to the base station.

For example, the first information may be a logged measurement configuration message.

For content that is not described in detail in this application, refer to Manner 1 in step 401. Specifically, the "assistance information" in Manner 1 may be replaced with the "first measurement configuration information" for understanding.

Manner (2): The first UE reports the first measurement configuration information via UE assistance information. In other words, the UE assistance information includes the first measurement configuration information. For a specific implementation, refer to Manner 2 in step 401.

For example, the base station sends second information to the first UE, where the second information includes configuration information of the UE assistance information. Optionally, the second information indicates the first UE to report the first measurement configuration information via the UE assistance information. The configuration information of the UE assistance information in the second information implicitly indicates the first UE to report the first measurement configuration information via the UE assistance information. Alternatively, the second information further includes second indication information, and the second indication information explicitly indicates the first UE to report the first measurement configuration information via the UE assistance information.

Optionally, the configuration information of the UE assistance information includes information related to a reported parameter (for example, the parameter type included in the first measurement configuration information), and the like. For the parameter type included in the first measurement configuration information, refer to the descriptions in step 601.

Optionally, the second information includes a reporting type, and the reporting type may be event-triggered reporting or periodic reporting.

Event-triggered reporting may be triggered by a change of the parameter included in the first measurement configuration information, for example, a parameter in the first measurement configuration information exceeds a threshold corresponding to the parameter, or changes of a plurality of parameters exceed thresholds corresponding to the parameters. It may be understood that different parameters correspond to different thresholds. The plurality of thresholds may be configured by the base station, for example, may be carried in the second information. Alternatively, the threshold may be a default value, and the default value is specified in a protocol. For example, if a variation of the measurement start threshold exceeds a threshold corresponding to the measurement start threshold, the first UE is triggered to report the first measurement configuration information; or it is specified that the first UE is triggered to report the first measurement configuration information only when changes of several parameters exceed thresholds corresponding to the parameters. For example, if both changes of the configured measurement start threshold and measurement gap exceed respective thresholds, the first UE is triggered to report the first measurement configuration information. The parameters enumerated in step 601 may be randomly combined, and combinations are not enumerated one by one in this application. Optionally, for event-triggered reporting, if the first UE obtains a parameter for the first time, reporting of the first measurement configuration information is triggered. That a parameter change is greater than a threshold further includes the following case: A new parameter is added. For example, first measurement configuration information reported last time does not include a parameter (for example, the parameter cannot be obtained, or has not been generated, or a new parameter type is added), and current first measurement configuration information obtains the parameter. In this case, it is considered that the parameter change is greater than the threshold.

For periodic reporting, the second information further carries a reporting periodicity (or referred to as a reporting time interval). The first UE periodically reports the first measurement configuration information based on the configured time interval. Optionally, for periodic reporting, the first UE does not need to determine whether the first measurement configuration information changes.

Optionally, the first UE may further report the first measurement configuration information through a combination of periodic reporting and event-triggered reporting. For example, the first UE periodically determines whether the first measurement configuration information changes. If the first measurement configuration information changes, the first UE reports the first measurement configuration information. If the first measurement configuration information does not change, the first UE does not report the first measurement configuration information.

Manner (3): The UE sends the first measurement configuration information to the base station as uplink data.

Optionally, when generating the first measurement configuration information, or when determining that a parameter in the first measurement configuration information is updated, the UE sends the first measurement configuration information to the base station.

For example, that the UE determines that the parameter in the first measurement configuration information is updated may be specifically that a parameter in the first measurement configuration information exceeds a threshold corresponding to the parameter or changes of a plurality of parameters exceed thresholds corresponding to the parameters. It may be understood that different parameters correspond to different thresholds. The plurality of thresholds may be configured by the base station, or the threshold may be a default value, and the default value is specified in a protocol. For example, if a variation of the measurement start threshold exceeds a threshold corresponding to the measurement start threshold, the first UE is triggered to report the first measurement configuration information; or it is specified that the first UE is triggered to report the first measurement configuration information only when changes of several parameters exceed thresholds corresponding to the parameters. For example, if both changes of the configured measurement start threshold and measurement gap exceed respective thresholds, the first UE is triggered to report the first measurement configuration information. The parameters enumerated in step 601 may be randomly combined, and combinations are not enumerated one by one in this application. Optionally, if the first UE obtains a parameter for the first time, reporting of the first measurement configuration information is triggered. That a parameter change is greater than a threshold further includes the following case: A new parameter is added. For example, first measurement configuration information reported last time does not include a parameter (for example, the parameter cannot be obtained, or has not been generated, or a new parameter type is added), and current first measurement configuration information obtains the parameter. In this case, it is considered that the parameter change is greater than the threshold.

Further, when the first UE is in an RRC idle state, if the first UE determines that the first measurement configuration information needs to be reported or sent, the first UE may first enter an RRC connected state.

Example (a): Once the first UE needs to report the first measurement configuration information (for example, generate logged MDT or UE assistance information, or send the first measurement configuration information as the uplink data), the first UE initiates a random access procedure to the base station (or synchronizes with the base station via a procedure without random access), and then enters the RRC connected state. Optionally, the first UE sends a scheduling request to the base station. The scheduling request is used to request an uplink resource from the base station. Then, the first UE reports the first measurement configuration information based on the requested uplink resource.

Example (b): After generating the first measurement configuration information (for example, generating logged MDT or UE assistance information, or sending the first measurement configuration information as the uplink data), the first UE does not immediately report the first measurement configuration information. Instead, when service data (for example, uplink service data or downlink service data) needs to be transmitted, the first UE initiates a random access procedure to the base station (or synchronizes with the base station via a procedure without random access). If an uplink resource is sufficient to send the first measurement configuration information, the first UE sends the first measurement configuration information. If the uplink resource is insufficient to send the first measurement configuration information, the first UE further sends a scheduling request to the base station to request an uplink resource, and reports the first measurement configuration information based on the requested uplink resource.

Step 603: The base station determines second measurement configuration information based on the first measurement configuration information.

There may be one or more first UEs. The base station may determine the second measurement configuration information based on first measurement configuration information of the one or more first UEs.

For example, the network search result reported by the first UE indicates that the measurement start threshold configured by the base station for the first UE is high, and when configuring the parameter, the base station may refer to the network search result and reduce the measurement start threshold. For example, the network search result reported by the first UE includes a cell reselection result, a historical measurement configuration parameter that corresponds to the cell reselection result and that is used by the first UE, an average number of network search measurements of the first UE, and throughput information of the first UE. The historical parameter configuration includes at least one of the following: a measurement start threshold, a measurement periodicity, and the like. If the network search result reported by the first UE shows that, when the first UE performs measurement by using a measurement start threshold A and a measurement periodicity B, the first UE selects a suitable cell to camp on, and an average number of measurements during cell reselection is reduced to some extent and throughput is not reduced, the base station may adjust, based on the measurement start threshold or the measurement periodicity reported by the first UE, the measurement configuration information to be delivered to the second UE. For example, the base station shows, based on the measurement start threshold or the measurement periodicity reported by the first UE, that the measurement start threshold configured by the base station is high or the measurement periodicity configured by the base station is short, and the base station reduces the measurement start threshold or prolongs the measurement periodicity. For example, the base station may directly use the measurement start threshold or the measurement periodicity reported by the first UE. For example, first measurement configuration information reported by each first UE is a measurement configuration parameter recommended by the first UE, where the measurement configuration parameter includes a measurement start threshold, a measurement gap, and the like. The base station determines, based on a plurality of measurement configuration parameters reported by the plurality of first UEs, the measurement configuration parameter to be delivered to the second UE. For example, the base station generates, by integrating the plurality of measurement configuration parameters, a measurement configuration parameter (namely, a second measurement configuration parameter) to be delivered to the UE. For example, the base station receives measurement start thresholds reported by the plurality of UEs, and the base station selects, from the measurement start thresholds reported by the first UEs, a measurement start threshold with a highest measurement start threshold as a measurement start threshold in the second measurement configuration information; and/or the base station selects, from measurement gaps corresponding to the first UEs, a measurement gap with a smallest measurement gap as a measurement gap in the second measurement configuration information. It may be understood that a method for generating the second measurement configuration information by the base station by integrating the plurality of configuration parameters is not limited.

For another example, the first measurement configuration information reported by each first UE includes N measurement configuration parameters and activation conditions corresponding to the N measurement configuration parameters. The base station generates, by integrating the plurality of configuration parameters, the configuration parameter configuration to be delivered to the second UE. One measurement parameter configuration or M measurement parameter configurations may be delivered to the second UE. For example, the base station selects, from all the received measurement configuration parameters and activation conditions corresponding to the measurement configuration parameters, the M measurement configuration parameters and their respective activation conditions, to form the second measurement configuration information. It may be understood that a method for generating the second measurement configuration information by the base station by integrating the plurality of configuration parameters is not limited.

In a possible manner, the second measurement configuration information includes the one measurement configuration parameter, or includes the M measurement configuration parameters and their respective activation conditions, where M is a positive integer, and M may be greater than, equal to, or less than N.

Step 604: The base station sends the second measurement configuration information.

For a manner in which the base station sends the second measurement configuration information, refer to the descriptions of sending the measurement configuration information by the base station in step 403. The "measurement configuration information" in step 403 may be replaced with the "second measurement configuration information" for understanding.

Optionally, the base station may further broadcast, based on the conventional technology, a piece of measurement configuration information (namely, the second measurement configuration information) in a cell managed by the base station. The second measurement configuration information is the same as configuration information in the conventional technology, for example, has only one configuration parameter, and optionally, does not include an activation condition. After receiving the configuration parameter, the UE directly applies the configuration parameter to perform measurement.

Correspondingly, the second UE receives the second measurement configuration information from the base station.

The first UE is UE that reports the first measurement configuration information, and the second UE is UE that receives the second measurement configuration information. There is one or more first UEs, and there may also be one or more second UEs.

It should be noted that, for a UE, the UE may report first measurement configuration information to the base station based on a historical measurement configuration parameter, and may also receive new measurement configuration information (namely, second measurement configuration information) from the base station. In this case, the UE may autonomously select to use the first measurement configuration information or the second measurement configuration information. Alternatively, the UE is configured only to report the first measurement configuration information to the base station based on the historical measurement configuration parameter, or the UE is configured only to receive the second measurement configuration information from the base station.

Step 605: The second UE performs cell measurement based on the second measurement configuration information.

In an example, if the second measurement configuration information includes one measurement configuration parameter, the second UE may perform cell measurement based on the one measurement configuration parameter. In another example, if the second measurement configuration information includes the M measurement configuration parameters and their respective activation conditions, the second UE may determine the status information of the second UE, and then determine, based on the status information of the second UE, the M measurement configuration parameters, and their respective activation conditions, the measurement configuration parameter corresponding to the status information of the second UE. For a specific implementation, refer to the descriptions of determining, by the base station, the measurement configuration parameter corresponding to the status information of the second UE in step 402. Further, the second UE performs cell measurement based on the selected measurement configuration parameter corresponding to the status information of the second UE.

For a specific implementation in which the second UE performs cell measurement (starts neighboring cell measurement, performs cell reselection, or the like) based on the measurement configuration information, refer to the descriptions in step 404.

In the foregoing technical solution, the first UE generates the assistance information based on the historical measurement configuration parameter, and then generates the first measurement configuration information based on the assistance information. The first UE reports the first measurement configuration information to the base station. Correspondingly, the base station can obtain the second measurement configuration information based on the first measurement configuration information. The second measurement configuration information includes the measurement configuration parameter corresponding to the status information of the second UE. The second UE can perform cell measurement based on the measurement configuration parameter corresponding to the status information of the second UE. This helps improve efficiency of cell measurement performed by the second UE and reduce power consumption of the second UE. Further, UE that cannot generate first measurement configuration information based on assistance information may can receive second measurement configuration information from the base station, thereby improving cell measurement efficiency.

Not all the steps shown in each flowchart are mandatory steps. A part of the steps may be deleted from the flowchart based on an actual requirement, or another possible step may be added to the flowchart based on an actual requirement. The foregoing focuses on differences between the first communication method, the second communication method, and the third communication method. For content other than the differences, the three communication methods may be mutually referenced. In addition, in a same communication method, different implementations or different examples may also be mutually referenced.

It may be understood that, to implement the functions in the foregoing embodiments, the base station and the UE include corresponding hardware structures and/or software modules for performing the functions. A person skilled in the art should be easily aware that, in combination with the units and the method steps in the examples described in embodiments disclosed in this application, this application can be implemented by hardware or a combination of the hardware and computer software. Whether a function is performed by hardware or hardware driven by computer software depends on particular application scenarios and design constraints of the technical solutions.

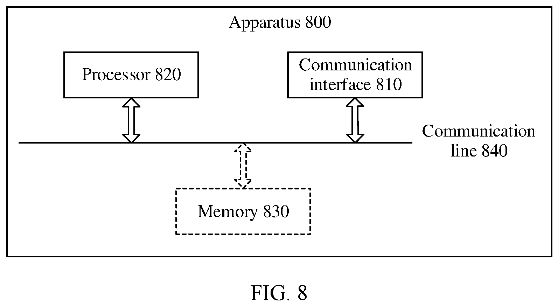

Based on the foregoing content and a same concept, FIG. 7 and FIG. 8 are diagrams of structures of possible communication apparatuses according to this application. These communication apparatuses may be configured to implement the functions of the UE or the base station in the foregoing method embodiments, and therefore can also achieve beneficial effect of the foregoing method embodiments.

For example, the communication apparatus may be a terminal 120 shown in FIG. 1, or may be a base station 110 shown in FIG. 1, or may be a module (for example, a chip) used in the terminal or the base station.

As shown in FIG. 7, the communication apparatus 700 includes a processing module 710 and a transceiver module 720.

When the communication apparatus 700 is configured to implement the functions of the base station in the method embodiment shown in FIG. 4,
the transceiver module 720 is configured to receive assistance information from UE, and the processing module 710 is configured to determine measurement configuration information based on the assistance information, where the measurement configuration information includes at least one measurement configuration parameter and an activation condition for the at least one measurement configuration parameter, and the measurement configuration information is used by the UE to perform cell measurement; and the transceiver module 720 is further configured to send the measurement configuration information.

When the communication apparatus 700 is configured to implement the functions of the UE in the method embodiment shown in FIG. 4,
the transceiver module 720 is configured to send assistance information, where the assistance information is used by an access network device to determine measurement configuration information, and the measurement configuration information includes at least one measurement configuration parameter and an activation condition for the at least one measurement configuration parameter; the transceiver module 720 is further configured to receive the measurement configuration information; and the processing module 710 is configured to perform cell measurement based on the measurement configuration information.

When the communication apparatus 700 is configured to implement the functions of the base station in the method embodiment shown in FIG. 5,
the transceiver module 720 is configured to: receive assistance information of UE and receive a measurement configuration request of the UE, where the measurement configuration request includes status information of the UE, and the status information of the UE includes location information and/or mobility information of the UE; the processing module 710 is configured to generate measurement configuration information of the UE based on the assistance information of the UE and the status information of the UE, where the measurement configuration information includes a measurement configuration parameter corresponding to the status information of the UE; and the transceiver module 720 is configured to send the measurement configuration information.

When the communication apparatus 700 is configured to implement the functions of the UE in the method embodiment shown in FIG. 5,
the transceiver module 720 is configured to send assistance information of the UE and a measurement configuration request of the UE, where the measurement configuration request includes status information of the UE, and the status information of the UE includes location information and/or mobility information of the UE; the transceiver module 720 is configured to receive measurement configuration information of the UE, where the measurement configuration information includes a measurement configuration parameter corresponding to the status information of the UE; and the processing module 710 is configured to perform cell measurement based on the measurement configuration parameter corresponding to the status information of the UE.

When the communication apparatus 700 is configured to implement the functions of the UE in the method embodiment shown in FIG. 6,
the processing module 710 is configured to: generate assistance information, and determine first measurement configuration information based on the assistance information, where the first measurement configuration information includes status information of the UE and a measurement configuration parameter corresponding to the status information of the UE, or the first measurement configuration information includes at least one measurement configuration parameter and an activation condition for the at least one measurement configuration parameter; and the transceiver module 720 is configured to send the first measurement configuration information to an access network device, where the first measurement configuration information is used to assist in determining second measurement configuration information.

When the communication apparatus 700 is configured to implement the functions of the base station in the method embodiment shown in FIG. 6,
the transceiver module 720 is configured to receive first measurement configuration information, where the first measurement configuration information includes status information of UE and a measurement configuration parameter corresponding to the status information of the UE, or the first measurement configuration information includes at least one measurement configuration parameter and an activation condition for the at least one measurement configuration parameter; the processing module 710 is configured to generate second measurement configuration information based on the first measurement configuration information; and the transceiver module 720 is further configured to send the second measurement configuration information.

For more detailed descriptions of the processing module 710 and the transceiver module 720, directly refer to related descriptions in the method embodiments shown in FIG. 4 to FIG. 6. Details are not described herein again.

FIG. 8 shows an apparatus 800 according to an embodiment of this application. The apparatus shown in FIG. 8 may be an implementation of a hardware circuit of the apparatus shown in FIG. 7. The apparatus is applicable to the flowchart shown above, and performs the functions of the UE or the base station in the foregoing method embodiments.

For ease of description, FIG. 8 shows only main components of the apparatus.

The apparatus 800 shown in FIG. 8 includes a communication interface 810, a processor 820, and a memory 830. The memory 830 is configured to store program instructions and/or data. The processor 820 may cooperate with the memory 830. The processor 820 may execute the program instructions stored in the memory 830. When the instructions or a program stored in the memory 830 is executed, the processor 820 is configured to perform an operation performed by the processing module 710 in the foregoing embodiment, and the communication interface 810 is configured to perform an operation performed by the transceiver module 720 in the foregoing embodiment.

The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. At least one memory 830 may be included in the processor 820.

In this embodiment of this application, the communication interface may be a transceiver, a circuit, a bus, a module, or another type of communication interface. In this embodiment of this application, when the communication interface is a transceiver, the transceiver may include an independent receiver and an independent transmitter, or may be a transceiver integrated with a transceiver function, or a communication interface.

The apparatus 800 may further include a communication line 840. The communication interface 810, the processor 820, and the memory 830 may be connected to each other through the communication line 840. The communication line 840 may be a peripheral component interconnect (peripheral component interconnect, PCI for short) bus, an extended industry standard architecture (extended industry standard architecture, EISA for short) bus, or the like. The communication line 840 may be classified into an address bus, a data bus, a control bus, and the like. For ease of representation, only one thick line is used to represent the bus in FIG. 8, but this does not mean that there is only one bus or only one type of bus.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information to the storage medium. Certainly, the storage medium may alternatively be a component of the processor. The processor and the storage medium may be located in an ASIC. In addition, the ASIC may be located in a base station or UE. Certainly, the processor and the storage medium may alternatively exist in the base station or the UE as discrete components.

The foregoing embodiments may be all or partially implemented by software, hardware, firmware, or any combination thereof. When being implemented by the software, the foregoing embodiments may be all or partially implemented in a form of a computer program product. The computer program product includes one or more computer programs or instructions. When the computer program or the instruction is loaded and executed on a computer, the procedure or functions according to embodiments of this application are all or partially generated. The computer may be a general-purpose computer, a dedicated computer, a computer network, a network device, user equipment, or another programmable apparatus. The computer program or the instruction may be stored in a computer-readable storage medium, or may be transmitted from a computer-readable storage medium to another computer-readable storage medium. For example, the computer program or the instruction may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising
receiving assistance information;
determining measurement configuration information based on the assistance information, wherein the measurement configuration information comprises at least one measurement configuration parameter and an activation condition for the at least one measurement configuration parameter, and the measurement configuration information is used by a terminal device to perform measurement; and
sending the measurement configuration information.

2. The method according to claim 1, wherein
the assistance information comprises one or more of the following parameters:
a radio resource management RRM measurement result when the terminal device performs cell selection;
an RRM measurement result when the terminal device performs cell reselection;
a historical measurement configuration parameter used by the terminal device when the terminal device generates the assistance information;
a number of measurements of the terminal device during a period from start of neighboring cell measurement to end of cell reselection;
a cell selection result of the terminal device;
a cell reselection result of the terminal device; or
throughput information of the terminal device.

3. The method according to claim 1 or 2, wherein the measurement configuration parameter comprises one or more of the following parameters:
an identifier of a neighboring cell, a measurement frequency, a measurement start threshold, a measurement stop threshold, a measurement gap, a measurement periodicity, a measurement priority, or gain information, wherein the gain information comprises a gain range and a probability range corresponding to the gain range.

4. The method according to any one of claims 1 to 3, wherein the activation condition comprises one or more of the following parameters: area information, mobility information, or an activation period corresponding to the measurement configuration parameter.

5. The method according to any one of claims 1 to 4, wherein sending the measurement configuration information comprises:
sending the measurement configuration information to the terminal device via radio resource control RRC dedicated signaling.

6. The method according to claim 5, wherein before sending the measurement configuration information to the terminal device via the RRC dedicated signaling, the method further comprises:
determining a terminal device that subscribes to the measurement configuration information.

7. The method according to claim 5 or 6, wherein before sending the measurement configuration information to the terminal device via the RRC dedicated signaling, the method further comprises:
receiving a measurement configuration request from the terminal device, wherein the measurement configuration request comprises status information of the terminal device, and the status information of the terminal device comprises location information and/or mobility information of the terminal device; and
determining, based on the status information of the terminal device, the measurement configuration information to be delivered to the terminal device.

8. The method according to any one of claims 1 to 4, wherein sending the measurement configuration information comprises:
sending a broadcast message, wherein the broadcast message comprises the measurement configuration information.

9. The method according to any one of claims 1 to 8, wherein the assistance information is carried in logged minimization of drive tests, or the assistance information is carried in terminal device assistance information.

10. The method according to claim 9, further comprising:
sending first information to the terminal device, wherein the first information comprises configuration information of the logged minimization of drive tests, and the first information indicates the terminal device to report the assistance information via the logged minimization of drive tests; or
sending second information to the terminal device, wherein the second information comprises configuration information of the terminal device assistance information, and the second information indicates the terminal device to report the assistance information via the terminal device assistance information.

11. A communication method, comprising:
sending assistance information, wherein the assistance information is used to determine measurement configuration information, and the measurement configuration information comprises at least one measurement configuration parameter and an activation condition for the at least one measurement configuration parameter;
receiving the measurement configuration information; and
performing cell measurement based on the measurement configuration information.

12. The method according to claim 11, wherein performing cell measurement based on the measurement configuration information comprises:
determining, from the at least one measurement configuration parameter based on status information and the activation condition for the at least one measurement configuration parameter, a measurement configuration parameter corresponding to the status information, wherein the status information comprises location information and/or mobility information; and
performing cell measurement based on the measurement configuration parameter corresponding to the status information.

13. The method according to claim 11 or 12, wherein the assistance information comprises one or more of the following parameters:
a radio resource management RRM measurement result when cell selection is performed;
an RRM measurement result when cell reselection is performed;
a historical measurement configuration parameter used when the assistance information is generated;
a number of measurements during a period from start of neighboring cell measurement to end of cell reselection;
a cell selection result;
a cell reselection result; or
throughput information.

14. The method according to any one of claims 11 to 13, wherein the measurement configuration parameter comprises one or more of the following parameters:
an identifier of a neighboring cell, a measurement frequency, a measurement start threshold, a measurement stop threshold, a measurement gap, a measurement periodicity, a measurement priority, or gain information, wherein the gain information comprises a gain range and a probability range corresponding to the gain range.

15. The method according to any one of claims 11 to 14, wherein the activation condition comprises one or more of the following parameters: area information, mobility information, or an activation period corresponding to the measurement configuration parameter.

16. The method according to any one of claims 11 to 15, wherein receiving the measurement configuration information comprises:
receiving the measurement configuration information from an access network device via radio resource control RRC dedicated signaling.

17. The method according to claim 16, wherein before receiving the measurement configuration information from the access network device via the RRC dedicated signaling, the method further comprises:
subscribing to the measurement configuration information.

18. The method according to claim 16 or 17, wherein before receiving the measurement configuration information from the access network device via the RRC dedicated signaling, the method further comprises:
sending a measurement configuration request to the access network device, wherein the measurement configuration request comprises the status information, the status information comprises the location information and/or the mobility information, and the status information is used to determine the measurement configuration parameter used for measurement.

19. The method according to any one of claims 11 to 15, wherein receiving the measurement configuration information comprises:
receiving a broadcast message from the access network device, wherein the broadcast message comprises the measurement configuration information.

20. The method according to any one of claims 11 to 19, wherein the assistance information is carried in logged minimization of drive tests, or the assistance information is carried in terminal device assistance information.

21. The method according to claim 20, further comprising:
receiving first information from the access network device, wherein the first information comprises configuration information of the logged minimization of drive tests, and the first information indicates to report the assistance information via the logged minimization of drive tests; or
receiving second information from the access network device, wherein the second information comprises configuration information of the terminal device assistance information, and the second information indicates to report the assistance information via the terminal device assistance information.

22. A communication apparatus, comprising a module configured to perform the method according to any one of claims 1 to 10, or comprising a module configured to perform the method according to any one of claims 11 to 21.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 via a logic circuit or by executing code instructions, or the processor is configured to implement the method according to any one of claims 11 to 21 via a logic circuit or by executing code instructions.

24. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 21 is implemented.

25. A computer program product, wherein the computer program product comprises a computer program or instructions, and when the computer program or the instructions are executed by a communication apparatus, the method according to any one of claims 1 to 10 is implemented, or the method according to any one of claims 11 to 21 is implemented.
